(19) Europäisches Patentamt
European Patent Office
Office européen des brevets

(11) **EP 4 232 786 B1**

(12) **EUROPEAN PATENT SPECIFICATION**

(45) Date of publication and mention
of the grant of the patent:
**28.08.2024 Bulletin 2024/35**

(21) Application number: **21799039.9**

(22) Date of filing: **26.10.2021**

(51) International Patent Classification (IPC):
**G01L 3/10** (2006.01)     **G01L 3/14** (2006.01)

(52) Cooperative Patent Classification (CPC):
**G01L 3/108; G01L 3/1457**

(86) International application number:
**PCT/EP2021/079601**

(87) International publication number:
**WO 2022/090185 (05.05.2022 Gazette 2022/18)**

(54) **MULTI-AXIS FORCE-TORQUE SENSING DEVICE AND HOLDING STRUCTURE FOR USE THEREWITH**

MEHRACHSIGE KRAFTDREHMOMENTMESSVORRICHTUNG UND HALTESTRUKTUR ZUR VERWENDUNG DAMIT

DISPOSITIF DE DÉTECTION DE FORCE-COUPLE À AXES MULTIPLES ET STRUCTURE DE SUPPORT À UTILISER AVEC CE DISPOSITIF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.10.2020 EP 20203891**

(43) Date of publication of application:
**30.08.2023 Bulletin 2023/35**

(73) Proprietor: **Katholieke Universiteit Leuven KU Leuven Research & Development 3000 Leuven (BE)**

(72) Inventors:
- **CROES, Jan**
  **3010 Kessel-Lo (BE)**
- **DESMET, Wim**
  **3051 Sint-Joris-Weert (BE)**
- **PLUYMERS, Bert**
  **3350 Neerlinter (BE)**

(74) Representative: **Winger**
**Mouterij 16 bus 101**
**3190 Boortmeerbeek (BE)**

(56) References cited:
**US-A- 5 585 572     US-A1- 2018 080 840**

**Description**

**Field of the invention**

The present invention is generally related to a holding structure for a multi-axis force-torque sensing device, and to a multi-axis force-torque sensing device comprising such a holding structure for measuring at least one force-torque component, optionally also power, on a test object clamped by the holding structure.

**Background of the invention**

Force-torque sensors are used in robotics, vehicles, machinery, and other applications where the force-torque acting on an element such as a part of a machine is desired to be quantified.

Some existing force-torque sensors require direct installation in the transmission path of the force-torque acting on the part, requiring modification of the part and causing its dynamic behaviour to be altered, which may be undesirable. Such force-torque sensors also tend to require dismantling of the machine for installation. Hence, there is an ongoing need to provide an improved, scalable compact holding structure, which is easy to manufacture and measures accurately force-torque components in plural directions.

Documents US5585572A (KINDLER ULRICH [DE]) and US2018/080840 A1 (GLEESON TORIN [US] ) both disclose examples of force-torque sensing devices and holding devices for said sensing devices.

**Summary of the invention**

The present invention aims to overcome the above stated shortcomings and to provide a multi-axis force-torque sensing device which is compact, requires a minimum of manufacturing steps as compared to existing force-torque sensing devices, and is able to provide accurate measurements of force-torque components in plural directions with a minimum of, or even without, any modifications to a test object itself but only including a releasable add-on force-torque sensing device that has limited influence on the dynamics of the test object.

According to a first aspect, the present invention provides for this purpose a holding structure for a multi-axis force-torque sensing device for measuring at least one force-torque component on a test object in accordance with claim 1.

It is an advantage of the holding structure to have a compact device size due to the limited number of technical features and their small dimensions. Moreover, the holding structure does not substantially affect the dynamic behaviour of the test object. It is an advantage of the invention that the coupling projections allow having limited but rigid coupling with the test object, minimizing the effect of surface irregularities on the clamping and measurements. The relation between the stiffnesses also excludes the need to measure precisely the coupling stiffness in order to calculate a force or torque component.

According to a particular embodiment of the invention, the first and second clamping elements each comprise a first portion and a second portion releasably connectable to the corresponding first portion. It is an advantage of embodiments of the present invention that the holding structure can easily be mounted to a test object. Indeed, the structure can be placed at the circumference of the test object and engage with the test object, following the second portions can be coupled to the first portions to guarantee a predetermined clamping force. Hence, it is an advantage of embodiments of the present invention to be adjustable to test objects defining a broad range of shapes and sizes. This also allows a rotational and/or a linear adjustment of the holding structure along a longitudinal axis (X-direction) of the test object.

According to a particular embodiment of the invention, the first portion of the first clamping element, the first portion of the second clamping element and the first connector defining a first monolithic structure. It is a further advantage of a holding structure according to embodiments of the invention that the monolithic or one-piece structure ensures a smooth predictable dynamic behaviour of the structure when a force-torque is applied. It also decreases the chance for misalignments, stress concentrations and the need for larger components.

According to a specific embodiment of the invention, the coupling between the first end of the first connector and the first inner facing surface of the first clamping element is a glued, welded, or adhesively bonded connection. It is an advantage of embodiments of the present invention that the gluing, welding or adhesively bonding of at least one portion of the first connector to at least one portion of the first inner facing surface of the first clamping element does not require any further modifications to these elements to receive additional fastening means, like bolts or screws, to fasten these elements together. Moreover, the holding structure ensures a smooth predictable dynamic behaviour of the structure when a force-torque is applied. It also decreases the chance for misalignments, stress concentrations and the need for larger components.

According to a specific embodiment of the invention, the first connector further comprises a second substantially planar portion at the opposite side of the first substantially planar portion, wherein the distance between the planar portions defines a first connector thickness $t_1$, and wherein the ratio between the first width $w_1$ of the first connector and the first connector thickness $t_1$ is substantially equal to or larger than 5. It is an advantage of embodiments of the present invention that the first connector of the holding structure has a relatively small stiffness in comparison with the other structural features, excluding the need to know or to measure precisely the coupling stiffness in order to calculate a force-torque component. Moreover, having a substantial planar portion or portions on both opposite sides of the connector provides the advantage of placing gauge measurement means for an accurate measurement of at least one six degree-of-freedom force-torque component.

According to a particular embodiment of the invention, the holding structure further comprising a second connector having a first end coupled to the first inner facing surface of the first clamping element and a second end coupled to the second inner facing surface of the second clamping element, wherein the second connector is circumferentially spaced apart from the first connector, wherein the second connector further comprises a third substantially planar portion having a second width $w_2$ located in a second plane for receiving strain measuring means, wherein the second connector has a second connector six degree-of-freedom stiffness matrix,

wherein the first clamping element has a first clamping element six degree-of-freedom stiffness matrix with respect to the second connector;
wherein the second clamping element has a second clamping element six degree-of-freedom stiffness matrix with respect to the second connector; and
wherein each diagonal element of the second connector six degree-of-freedom stiffness matrix is less than each corresponding diagonal element of the first clamping element six degree-of-freedom stiffness matrix with respect to the second connector, and wherein each diagonal element of the second connector six degree-of-freedom stiffness matrix is less than each corresponding diagonal element of the second clamping element 6 degree-of-freedom stiffness matrix with respect to the first connector. It is an advantage of embodiments of the present invention that the holding structure comprises two connectors allowing on each connector to install various bridge configurations to optimize gauge measurement means output resulting in accurate force-torque component determination.

In a particular embodiment of the invention, the contact engageable portion of at least one of the plurality of first and second coupling projections comprises a spacer or structural element adapted for, when in use, reducing a size discrepancy between the coupling projection and the test object. It is an advantage of embodiments of the present invention that the holding structure comprises these specific coupling projections to ensure a predetermined sufficient stiffness.

In a particular embodiment of the invention, the first substantially planar portion of the first connector is radially extending from a central axis over a distance substantially equal to the first width $w_1$, wherein the central axis is defined by the centre of the first aperture and the centre of the second aperture.

In a particular embodiment of the invention, a selection of the first and second coupling projections comprises a neck portion having stress relief grooves. It is an advantage of embodiments of the present invention that the coupling projections comprises stress relief grooves which heavily reduces the contact peaks near the sides allowing for a larger pretension of the test object.

In a particular embodiment of the invention, the angular separation between the first connector and the second connector is at least 30 degrees, in particular substantially equal to 45 degrees, and more in particular substantially equal to 90 degrees. It is an advantage of embodiments of the present invention that the connectors are separated from each other allowing a better measurement of bending moments in both directions.

In a particular embodiment of the invention, the second connector further comprises a fourth substantially planar portion at the opposite side of the third substantially planar portion, wherein the distance between the planar portions defines a second connector thickness $t_2$, and wherein the ratio between the second width $w_2$ of the second connector and the second connector thickness $t_2$ is substantially equal to or larger than 5. It is an advantage of embodiments of the present invention that the first connector of the holding structure has a relatively small stiffness in comparison with the other structural features, excluding the need to know/measure precisely the coupling stiffness in order to calculate a force or torque component. Moreover, having a substantial planar portion or portions on both opposite sides of the connector provides the advantage of placing gauge measurement means for an accurate measurement of at least one six degree-of-freedom force-torque component.

According to another aspect of the invention, there is provided a multi-axis force-torque sensing device for measuring at least one force-torque component on a test object, comprising a holding structure according to any of the previous embodiments for holding the test object, further comprising at least one strain measuring means disposed on at least one connector, wherein the strain measuring means is selected from the group consisting of a semiconductor strain sensor, a piezoelectric strain sensor, a resistance-based strain sensor or a surface acoustic wave based strain sensor.

In a particular embodiment of the invention, the multi-axis force-torque sensing device further comprises at least one accelerometer.

According to another aspect of the invention, there is provided a method of determining at least one force-torque component acting on a test component in at least one direction in accordance with claim 14.

In a particular embodiment of the invention, the step of securing the holding structure of the multi-axis force-torque sensing device to the test object comprises a step of mechanically coupling of the holding structure to the test object such that the first clamping element has a first clamping element coupling six degree-of-freedom stiffness matrix with respect to the test object, and such that the second clamping element has a second clamping element coupling six degree-of-freedom stiffness matrix with respect to the test object, wherein each diagonal element of the first connector six degree-of-freedom stiffness matrix is less than each corresponding diagonal element of the first clamping element six degree-of-freedom stiffness matrix with respect to the first connector, and wherein each diagonal element of the first connector six degree-of-freedom stiffness matrix is less than each corresponding diagonal element of the second clamping element six degree-of-freedom stiffness matrix with respect to the first connector.

**Brief description of the drawings**

The foregoing summary, as well as the following detailed description of a preferred embodiment of the present invention, will be better understood when read in conjunction with the appended drawings. For the purpose of illustrating the invention, there is shown in drawings an embodiment which is presently preferred, it being understood, however, that the invention is not limited to the precise arrangement and instrumentalities disclosed.

Further features of the present invention will become apparent from the examples and figures, wherein :

Figure 1, hereinafter referred to as Fig.1, is a perspective view of a holding structure for a multi-axis force-torque sensing device according to embodiments of the present invention.

Figure 2a, hereinafter referred to as Fig.2a, is a perspective view of a holding structured mechanically engaged or coupled to a test object according to embodiments of the present invention. Figure 2b, hereinafter referred to as Fig.2b, is a perspective view of a holding structured mechanically engaged or coupled to a test object according to embodiments of the present invention. Figure 2c, hereinafter referred to as Fig.2c, is a coupling stiffness diagram of a multi-axis force-torque sensing device according to embodiments of the present invention.

Figure 3, hereinafter referred to as Fig.3, is a perspective view of a monolithic structure of a portion of the holding structure according to embodiments of the present invention.

Figure 4, hereinafter referred to as Fig.4, is a perspective view of a portion of a first and a second clamping element of the holding structure according to embodiments of the present invention.

Figure 5a, Figure 5b, and Figure 5c, hereinafter referred to as Fig.5a, Fig.5b, Fig.5c, respectively, are an axial view, according to a first direction (X-direction), of a first or second clamping element of a holding structure according to embodiments of the present invention.

Figure 6, hereinafter referred to as Fig.6, is a side view of the holding structure comprising a test object.

Figure 7, hereinafter referred to as Fig.7, is a side view of the holding structure according to embodiments of the invention.

Figure 8, hereinafter referred to as Fig.8, is an axial view, according to a first direction (X-direction), of a first clamping element.

Figures 9a, 9b, 9c, 9d and 9e, hereinafter referred to as Fig.9a, 9b, 9c, 9d and 9 illustrate different perspective views of second portions or third portions of respectively a first or second clamping element of a holding structure according to specific embodiments of the present invention.

Figures 10a, 10b, 10c and 10d, hereinafter referred to as Fig.10a, 10b, 10c and 10d, depict different perspective views of a monolithic structure of a portion of the holding structure according to embodiments of the present invention.

Figures 11a, 11b and 11c, hereinafter referred to as Fig.11a, 11b, and 11c show different perspective views of a holding structure according to embodiments of the present invention before the monolithic structure is brought into direct contact with a portion of the corresponding clamping element.

**Detailed description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated. The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein. In the drawings, like reference numerals indicate like features; and, a reference numeral appearing in more than one figure refers to the same element.

Unless indicated otherwise, when in the present application reference is made to "a glued, welded, or adhesively bonded connection" between at least parts of features or elements of the present invention, reference may be made to a direct connection without any intermediate fastening elements like screws or bolts.

Unless indicated otherwise, when in the present application reference is made to "axial or radial directions", reference is made to direction relative to the central axis 7 of the holding structure according to the embodiments of the present invention. Elements radially or axially spaced apart from each other are located at a substantially different distance from the central axis 7.

Unless indicated otherwise, when in the present application reference is made to "circumferentially spaced apart" elements of the invention, reference is made to elements disposed at an equal, or substantially equal, radial or axial distance according to the central axis 7 of the holding structure according to embodiments of the present invention, and spaced apart from each other along the similar radial or axial distance. For these elements, an angular separation between each other may be defined with respect to the central axis 7 of the holding structure.

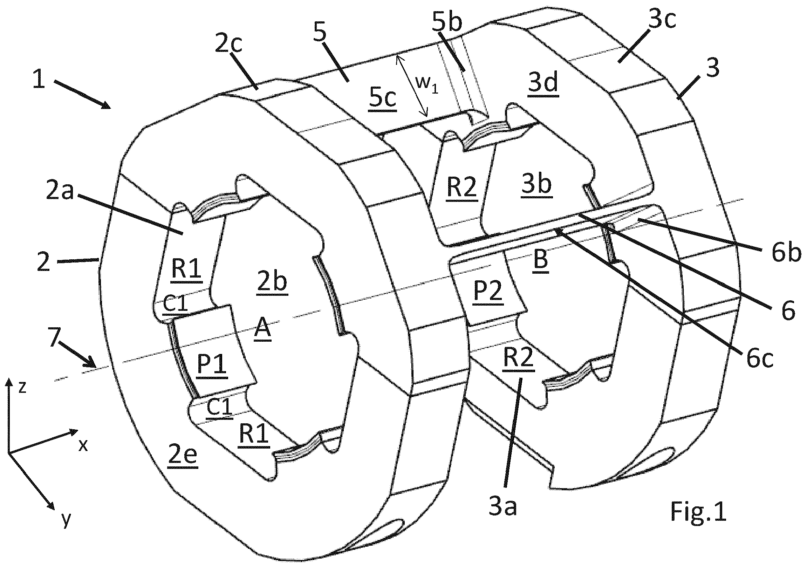

Referring to Fig.1, a holding structure 1 for a multi-axis force-torque sensing device according to embodiments of the present invention is depicted. The holding structure comprises a first clamping element 2 and a second clamping element 3, wherein the second clamping element is spaced apart from the first clamping element in a first direction, also referred to as an X-direction.

The first clamping element 2 has a first inner circumferential surface 2a extending in the first direction (X-direction) and defining a first aperture 2b for receiving a first portion of a test object 4 (not shown in Fig.1). The first inner circumferential surface 2a comprises a plurality of first coupling projections P1 circumferentially distributed around the first aperture 2b. The first coupling projections P1 are circumferentially spaced apart from each other by a plurality of first recesses R1.

The first coupling projections P1 each comprise a contact-engageable portion, facing radially inward the first aperture 2b, and adapted to mechanically engage or couple with a first portion of an outer surface of the test object 4. According to preferred embodiments of the present invention, these contact-engageable portions, when in use, mechanically engage with the curvature of the first portion of the outer surface of the test object 4 to ensure larger contact surfaces and reduced stress peaks. For example, for an elongated tubular shaped test object 4 having a radially outwardly curved outer surface, the contact-engageable portions have a curved surface to receive at least a portion of the outer surface of the test object 4. The contact-engageable portion may have an angular width, measured along the circumference of the first aperture 2b, of $45 \pm 10$ degrees, without being limited thereto.

The first recesses R1 are circumferentially spaced apart by the first projections P1 and are configured not to engage or mechanically couple with the test object 4. The first recesses R1 have a substantially flat surface adapted to receive sensing means, without being limited thereto, temperature sensing and/or clamping force measuring means. Among suitable couplers or coupling means, particular embodiments of the invention may include a mechanical coupling, without being limited thereto, meaning any appropriate coupling means that allows forces to be selectively transmitted between the test object 4 and the first clamping element 2.

The first inner circumferential surface 2a may further comprise concave-shaped recesses disposed in between the contact-engaged end portions of the first coupling projection P1 and the first recess R1, configured to have the advantage of reducing contact peaks and overall stress near the contact-engaged end portions of the first coupling projections P1.

The first clamping element 2 further comprises a first outer circumferential surface 2c opposed to and spaced radially outward from the first inner circumferential surface 2a. The first outer circumferential surface 2c extends in the first direction (X-direction), defining the thickness of the first clamping element 2. According to at least one preferred embodiment of the invention, the first clamping element 2 may have a minimal first thickness of six (6) millimeters (mm), preferably eight (8) millimeters (mm).

The second clamping element 3 has a second inner circumferential surface 3a extending in the first direction (X-direction) and defining a second aperture 3b for receiving a second portion of the test object 4. The second inner circumferential surface 3b comprises a plurality of second coupling projections P2 distributed around the second aperture 3b. The second coupling projections P2 are circumferentially spaced apart from each other by a plurality of second recesses R2.

The second coupling projections P2 each comprise a contact-engageable portion adapted to mechanically engage or couple with a second portion of an outer surface of the test object 4. According to preferred embodiments of the present invention, these contact-engageable portions, when in use, mechanically engage with the curvature of the second portion of the outer surface of the test object 4 to ensure larger contact surfaces and reduced stress peaks. For example, for an elongated tubular shaped test object 4 having a radially outwardly curved outer surface, the contact-engageable portions have a curved surface to receive at least a portion of the outer surface of the test object 4. According to a preferred embodiment of the present invention, the contact-engageable portion may have an angular width, measured along the circumference of the second aperture 2b, of 45 ± 10 degrees, without being limited thereto.

The second recesses R2 are circumferentially spaced apart by the second projections P2 and are configured not to engage or mechanically couple with the test object 4. The second recesses R2 have a substantially flat surface adapted to receive sensing means, without being limited thereto, temperature sensing and/or clamping force measuring means. Among suitable couplers or coupling means, particular embodiments of the invention may include a mechanical coupling, without being limited thereto, meaning any appropriate coupling means that allows forces to be selectively transmitted between the test object 4 and the second clamping element 3.

The second inner circumferential surface 3a may further comprise concave-shaped recesses disposed in-between the contact-engaged end portions of the second coupling projection P2 and the second recess R2, configured to have the advantage of reducing contact peaks and overall stress near the contact-engaged end portions of the second coupling projections P2.

The second clamping element 3 further comprises a second outer circumferential surface 3c opposed to and radially spaced apart from the first inner circumferential surface. The second outer circumferential surface 3c extends in the first direction (X-direction), defining the thickness of the second clamping element 3. According to at least one preferred embodiment of the invention, the second clamping element 3 may have a minimal second thickness of six (6) millimetres (mm), preferably eight (8) millimetres (mm).

According to embodiments of the present invention, the holding structure further comprises a first connector 5 having a first end 5a (not visible in Fig.1) coupled to a first inner facing surface 2d (not visible in Fig.1) of the first clamping element 2 and a second end 5b coupled to a second inner facing surface 3d of the second clamping element 3. The first inner facing surface 2d extends between first inner circumferential surface 2a and the first outer circumferential surface 2d and faces the second clamping element 3. The second inner facing surface 3d extends between second inner circumferential surface 3a and the second outer circumferential surface 3b and faces the first clamping element 2. Opposed to and separated in the first direction (X-direction) from the first inner facing surface 2d of the first clamping element is the first outer facing surface 2e. The first outer facing surface 2e extends between the first inner circumferential surface 2a and the first outer circumferential surface 2c of the first clamping element 2. The width of the first clamping element 2, also referred to as the thickness of the first clamping element 2, may be defined as the distance, measured along the first direction (X-direction), between the first outer facing surface 2e and the first inner facing surface 2d. The width of the first clamping element, or thickness of the first clamping element, is predetermined to ensure sufficiently stiff connection between the first clamping element 2 and the test object 4 when the multi-axis force-torque sensing device, according to embodiments of the invention, is in use.

According to the invention, the first connector 5 of the holding structure 1 further comprises a first substantially flat portion 5c for receiving strain measuring means (not shown), wherein the first portion is located in a first plane. In a particular embodiment of the present invention, this first plane may extend radially outward from a central axis 7 over a distance substantially equal to a first width $w_1$ (defined later), wherein the central axis 7 is extending in the first direction (X-direction) and defined by the centre of the first aperture 2b and the centre of the second aperture 3b. The central axis 7 may correspond with, when the invention is in use, the longitudinal axis of the test object 4. This specific configuration of the first substantially flat portion 5c has the advantage, when a strain measurement means is disposed thereon, of an accurate and efficient measurement of six degree-of-freedom (also referred to as "DOF") force-torque components in comparison with strain measurement means disposed on non-flat, curved portions.

In the present invention, the first connector 5 is configured to receive at least one strain measurement means, for example a strain gauge (not shown). In a preferred embodiment the strain gauge may comprise of several independent grids to complete a number of Wheatstone bridge configurations optimize the sensor output, when in use. The number of bridge configurations being equal or larger than the number of to be estimated components.

In a preferred embodiment of the holding structure 1 according to the present invention, the first connector 5 comprises a first 5c and a third 5d (not shown in Fig.1) substantially flat portion on opposite sides of the connector 5. When in use in multi-axis force-torque sensing device, the first connector 5 of the holding structure 1 may have several strain gauges mounted, for example, without being limited thereto, 4 independent grids, connected in a conventional Wheatstone bridge to form a first sensing circuit. This first sensing circuit, when in use, provides a first output signal responsive to a first force exerted between a test object 4 and the first clamping element 2 under a given load applied at a central point A of the first aperture 2 and a central point B of the second aperture 3.

A multi-axis force-torque sensing device according to embodiments of the present invention is capable of measuring forces in any direction and torques about any axis provided that the sensitivity of the force in that direction with respect to the strain output is known. Thus, by providing one or more suitably oriented strain measurement means, for example strain gauges, on the one or more connectors, linear forces in one, two, or three perpendicular directions and/or torques about one, two, or three perpendicular directions can be determined. Embodiments of the present invention can thus provide a holding structure for a multi-axis, six DOF force-torque sensing device and a multi-axis, six DOF force-torque sensing device comprising such a holding structure.

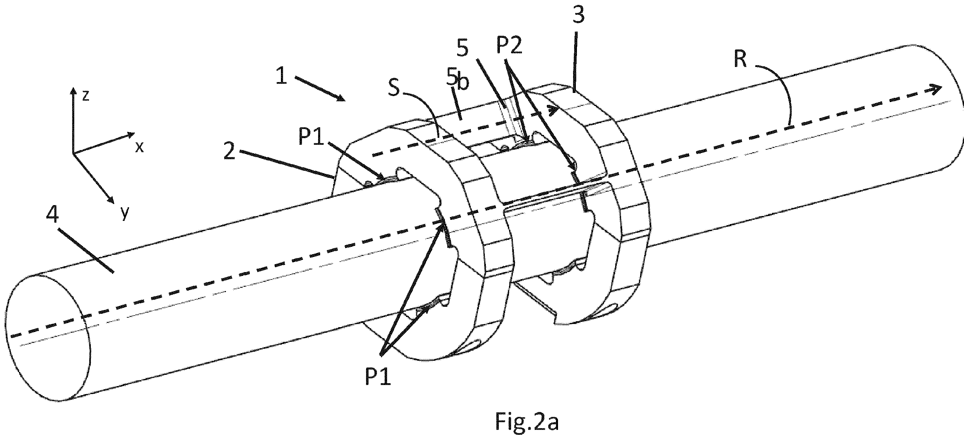

Referring to Fig.2a, there is depicted a holding structure 1 according to embodiments of the invention, wherein the holding structure is mechanically coupled or engaged with a test object 4. A first portion of the outer surface of the test object 4 is in mechanical contact with a plurality of first projections P1 disposed around the first aperture 2b of the first clamping element 2, and a second portion of the outer surface of the test object 4 is in mechanical contact with a plurality of second projections P2 disposed around the second aperture 3b of the second clamping element 3, in order to clamp the test object 4 in the holding structure 1 and to minimize or prevent a rotational and/or a linear adjustment of the holding structure 1 along a longitudinal axis (X-direction) of the test component 4.

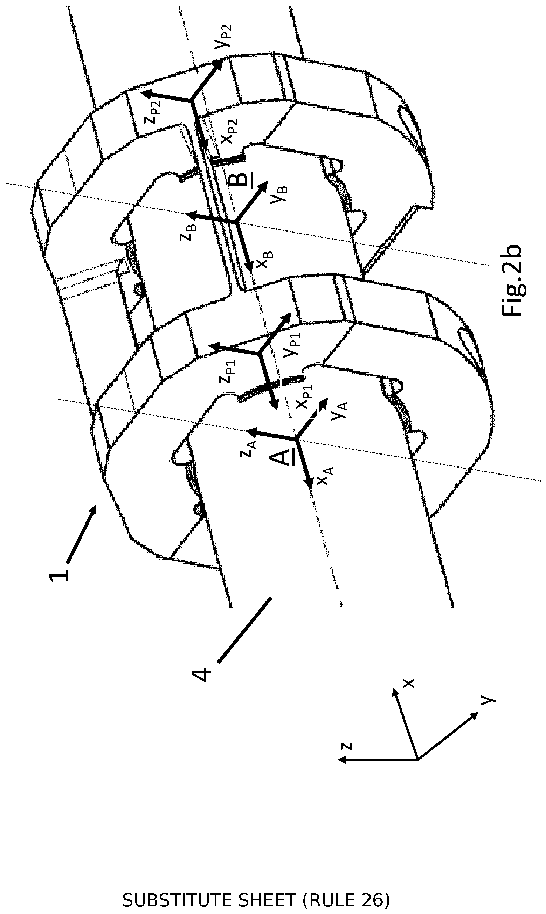

Referring to Fig.2b, wherein the holding structure 1 of Fig.2a is in connection with a test object 4, the following points and axes can be defined :

A central point of the first aperture and origin of axis system $X_A$, $Y_A$, $Z_A$;
B central point of the second aperture and origin of axis system $X_B$, $Y_B$, $Z_B$;
$X_A$ axis along longitudinal axis of test object, also referred to as the first direction, being defined orthogonal to the $Y_A$-$Z_A$ plane;
$X_B$ axis along longitudinal axis of test object, being defined orthogonal to the $Y_B$-$Z_B$ plane;
P1 origin of axis system $X_{P1}$, $Y_{P1}$, $Z_{P1}$ at a first coupling projection, wherein $X_{P1}$ being parallel with $X_A$, wherein $Y_{P1}$ being parallel with $Y_A$, and wherein $Z_{P1}$ being parallel with $Z_A$;
P2 origin of axis system $X_{P2}$, $Y_{P2}$, $Z_{P2}$ at a first coupling projection, wherein $X_{P2}$ being parallel with $X_B$, wherein $Y_{P2}$ being parallel with $Y_B$, and wherein $Z_{P2}$ being parallel with $Z_B$;

The stiffness of the test object 4 is defined by the relationship between a unit force applied at point A and the resulting relative displacement between points A and B. In the absence of the sensing device, the stiffness matrix can be numerically or experimentally obtained by applying six independent loading conditions $F_1$ to $F_6$ according to equation 1:

$$
\begin{bmatrix}
F_{x,1} & F_{x,2} & F_{x,3} & F_{x,4} & F_{x,5} & F_{x,6} \\
F_{y,1} & F_{y,2} & F_{y,3} & F_{y,4} & F_{y,5} & F_{y,6} \\
F_{z,1} & F_{z,2} & F_{z,3} & F_{z,4} & F_{z,5} & F_{z,6} \\
F_{xy,1} & F_{xy,2} & F_{xy,3} & F_{xy,4} & F_{xy,5} & F_{xy,6} \\
F_{yz,1} & F_{yz,2} & F_{yz,3} & F_{yz,4} & F_{yz,5} & F_{yz,6} \\
F_{zx,1} & F_{zx,2} & F_{zx,3} & F_{zx,4} & F_{zx,5} & F_{zx,6}
\end{bmatrix}_A
$$

$$
= [k]_T
\begin{bmatrix}
D_{x,1} & D_{x,2} & D_{x,3} & D_{x,4} & D_{x,5} & D_{x,6} \\
D_{y,1} & D_{y,2} & D_{y,3} & D_{y,4} & D_{y,5} & D_{y,6} \\
D_{z,1} & D_{z,2} & D_{z,3} & D_{z,4} & D_{z,5} & D_{z,6} \\
D_{xy,1} & D_{xy,2} & D_{xy,3} & D_{xy,4} & D_{xy,5} & D_{xy,6} \\
D_{yz,1} & D_{yz,2} & D_{yz,3} & D_{yz,4} & D_{yz,5} & D_{yz,6} \\
D_{zx,1} & D_{zx,2} & D_{zx,3} & D_{zx,4} & D_{zx,5} & D_{zx,6}
\end{bmatrix}_{AB,T}
\quad (1)
$$

$$
= [F] = [k]_T [D]
$$

where $F_{x,n}$ is the force in the x direction acting on the test object 4 at point A for a load $F_n$ where n takes values from 1 to 6. The force components in the y and z directions for load $F_n$ are similarly represented by $F_{y,n}$ and $F_{z,n}$ respectively. The torque component about the z direction is represented by $F_{xy,n}$ and similarly $F_{yz,n}$ represents the torque about the x direction and $F_{zx,n}$ the torque about the y direction.

The relative displacements between points A and B are represented by the indexed D values, thus for example $D_{y,4}$ is the displacement in the y direction subjected to a load $F_4$ and $D_{zx,3}$ is angle about the y axis subjected to a load $F_3$.

The stiffness matrix of the test object is represented by $[k]_T$. Thus by measuring the displacements $D$ under known loading conditions, the stiffness matrix $[k]_T$, according to each direction can be determined by multiplying the force matrix [F] with the inverse of the displacement matrix [D].

The stiffness matrix of a system of the sensing device 1 coupled to the test object 4, as depicted in Fig.2a and Fig.2b, may be referred to as $[K]_{M+T}$, wherein the subscript "M+T" represents the combined system of the multi-axis force-torque sensing device, referred to as "M", and the test object 4, referred to as "T". When reference is made to the stiffness matrix of the multi-axis force-torque sensing device, reference may also be made to the stiffness matrix of the holding structure 1 of the multi-axis force-torque sensing device.

The stiffness matrix of the system can again be determined by multiplying the respective force matrix with the inverse of the displacement matrix having subscript "AB, M+T". $[K]_{M+T}$ may be defined by the relationship between a unit force applied at point A and the resulting relative displacement between points A and B expressed in function of a load. The same loading conditions can be applied, with the difference that the sensing device is attached to the testing device (equation 2):

$$\begin{bmatrix} F_{x,1} & F_{x,2} & F_{x,3} & F_{x,4} & F_{x,5} & F_{x,6} \\ F_{y,1} & F_{y,2} & F_{y,3} & F_{y,4} & F_{y,5} & F_{y,6} \\ F_{z,1} & F_{z,2} & F_{z,3} & F_{z,4} & F_{z,5} & F_{z,6} \\ F_{xy,1} & F_{xy,2} & F_{xy,3} & F_{xy,4} & F_{xy,5} & F_{xy,6} \\ F_{yz,1} & F_{yz,2} & F_{yz,3} & F_{yz,4} & F_{yz,5} & F_{yz,6} \\ F_{zx,1} & F_{zx,2} & F_{zx,3} & F_{zx,4} & F_{zx,5} & F_{zx,6} \end{bmatrix}_A$$

$$= [k]_{M+T} \begin{bmatrix} D_{x,1} & D_{x,2} & D_{x,3} & D_{x,4} & D_{x,5} & D_{x,6} \\ D_{y,1} & D_{y,2} & D_{y,3} & D_{y,4} & D_{y,5} & D_{y,6} \\ D_{z,1} & D_{z,2} & D_{z,3} & D_{z,4} & D_{z,5} & D_{z,6} \\ D_{xy,1} & D_{xy,2} & D_{xy,3} & D_{xy,4} & D_{xy,5} & D_{xy,6} \\ D_{yz,1} & D_{yz,2} & D_{yz,3} & D_{yz,4} & D_{yz,5} & D_{yz,6} \\ D_{zx,1} & D_{zx,2} & D_{zx,3} & D_{zx,4} & D_{zx,5} & D_{zx,6} \end{bmatrix}_{AB,M+T} \quad (2)$$

$$[F]_A = [k]_{M+T}[D]_{AB,M+T}$$

The stiffness $[k]_M$ of the sensing device alone can be defined as the difference between the stiffness $[k]_{M+T}$ obtained when the sensing device is coupled to a test object 4 and the stiffness $[k]_T$ of the test object 4 alone, according to equation 3 :

$$[k]_M = [k]_{M+T} - [k]_T \quad (3)$$

With respect to the determination of the forces, the stiffness matrices as derived in the former equations do not necessarily need to be directly used. Instead of determining the relative displacement, the voltage output of the strain sensor can be recorded; the relevant equation is then $F = \varphi.V$ where F is the matrix of forces as in the above equations, $V$ is a matrix of the voltages measured by the strain sensor for the corresponding applied force, and $\varphi$ is a calibration matrix which relates measured voltages to applied forces. Thus by measuring the voltages output by the strain sensor when known forces are applied to a test object 4 which the sensing device is coupled, the calibration matrix can be used when the sensing device is coupled to a test object which is comprised in an apparatus in order to convert measured voltages into forces.

The force acting on the test object 4 is measured by measuring the change in strain on at least one surface of at least one connector. At least one strain sensor is required for each force component which is desired to be determined. Thus, the minimum configuration of the sensing device, suitable for measuring a force in one direction, is a single connector and a single strain sensor disposed on the connector between the first and second ends of the connector. Preferably, one or more strain sensors are used which are each configured to measure strain in more than one direction, which can help to make the voltage output substantially insensitive to other loading conditions besides the component of choice. For measurement of N force components, the number M of strain sensors with their voltage output should be at least N and the matrix $[\varphi]^{N.M}$ that governs this relationship should be of rank N, according to equation 6:

$$\begin{bmatrix} F_1 \\ \vdots \\ F_N \end{bmatrix}_A = [\varphi]^{N.M} \begin{bmatrix} V_1 \\ \vdots \\ V_M \end{bmatrix} \qquad (4)$$

The matrix $[\varphi]^{N.M}$ preferably has a substantially small condition number to provide for good invertibility.

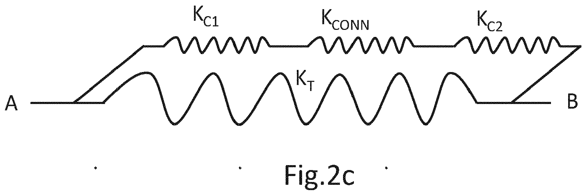

Referring to Fig.2c, a coupling stiffness diagram is depicted for embodiments of the holding structure, or the multi-axis force-torque sensing device comprising the holding structure according to the invention, wherein the holding structure comprises a single connector 5. For such systems, the overall stiffness of the testing device consisting of one transmission path can be represented as a series of three connected springs. In other words, the first clamping element stiffness matrix $[k]_{C1}$ and the second clamping element stiffness matrix $[k]_{C2}$ are in series with the connector stiffness matrix $[k]_{conn}$, contributing to the stiffness matrix of the multi-axis force-torque sensing device $[k]_M$. The first and second clamping element stiffness matrices $[k]_{C1}$, $[k]_{C2}$ and the connector stiffness $[k]_{conn}$ are in parallel with the test component stiffness $[k]_T$. Hence, under the assumption that the stiffness matrix of the connector is smaller than the stiffness matrices of the clamping elements, the multi-axis force-torque sensing device stiffness matrix $[k]_M$ can be given according to equation 5:

$$[k]_M^{-1} = [k]_{C1}^{-1} + [k]_{C2}^{-1} + [k]_{conn}^{-1} \approx [k]_{conn}^{-1} \quad (5)$$

Furthermore, from equation 4 and under the assumption that the diagonal elements of the first connector stiffness matrix are substantially smaller than the corresponding elements of the test object stiffness matrix, it may be demonstrated that the resulting stiffness matrix $[K]_{res}$ corresponds with the stiffness matrix of the test object 4, i.e.

$$[k]_{res} = [k]_T + [k]_M \approx [k]_T \quad (6)$$

This can be done both experimentally or numerically. For example, in a numerical finite element simulation, the relative displacement is straightforward to obtain if a local axis system is devised in the respective points A and B whereas an experimental procedure, a similar stiffness matrices can be obtained by placing strain gauges on the test object. By placing six strain sensors on the test object 4 representative for the six displacement components, it can be observed that the addition of the measurement device onto the testing device has a negligible changes on the strain output on the test object, hence a negligible stiffness contribution.

If there is more than one connector, a second parallel transmission path is generated. However, there will be some cross-coupling between both connectors and the stiffness of the one connector is influenced by the other. The relative stiffness properties can be verified while neglecting these cross-coupling effects.

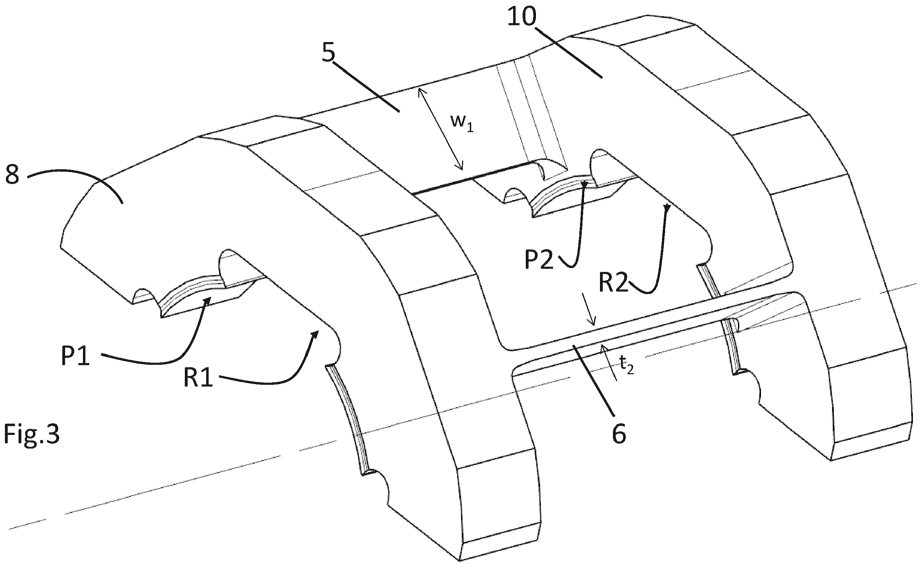

Referring to Fig.3, according to particular embodiments of the invention, the first connector 5 has a rectangular cross-section. The first connector 5 may have various shapes e.g., without being limited thereto, oval, squared, rectangular, T-shaped, I-shaped, etc. The first connector 5 may have a cross section which changes in the first direction (X-direction) between the first end 5a and the second end 5b. For example, the first connector 5 may have a square cross-section at the first 5a and second 5b end, where the cross section tapers in one direction to a rectangular cross section between the first 5a and second 5b end. The first connector may take the form of a flexural hinge. In a preferred embodiment of the holding structure 1 according to the present invention, the first connector 5 is configured to receive at least one strain measurement means, for example a strain gauge (not shown). The strain gauge may comprise six patches with two gauges each to install three full bridges to optimize the sensor output, when in use.

According to a preferred embodiment of the present invention, the first connector 5 is connected or coupled to a portion of the first inner facing surface 2d with a flexural hinge. This smooth transition between the first connector 5 and the first clamping element 2 minimizes stress concentrations. The second end 5b of the first connector 5 may also be connected or coupled to the second inner facing surface 3d in a smooth way using a flexural hinge.

According to a particular embodiment of the present invention, the holding structure 2 may further comprise a second connector 6. The second connector 6 having a first end 6a (not visible in Fig.3) coupled to the first inner facing surface 2d (not visible in Fig.3) of the first clamping element 2 and a second end 6b coupled to a second inner facing surface 3d of the second clamping element 3. The second connector 6 may further comprise a second substantially flat portion 6c for receiving strain measuring means (not shown), wherein the second portion is located in a second plane. In a particular embodiment of the present invention, this second plane is extending radially from the central axis 7, wherein the central axis 7 is extending in the first direction (X-direction) and may correspond with, when the invention is in use, the longitudinal axis of the test object 4. This specific configuration of the second substantially flat portion 6c has the advantage of an accurate measurement of six DOF forces.

According to embodiments of the present invention, the first connector 5 and second connector 6 are circumferentially spaced apart from each other at the same or substantially the same radial distance from the central axis 7. The circumferential distance between the first connector 5 and the second connector 6 may be defined by an angular separation between the first connector 5 and the second connector 6. According to embodiments of the present invention, this angular separation is at least 30 degrees, in particular substantially equal to 45 degrees, and more in particular substantially equal to 90 degrees. It is an advantage of embodiments of the present invention that the connectors are separated from each other allowing a better measurement of bending moments in both directions.

In a preferred embodiment of the holding structure 1 according to the present invention, the second connector 6 is configured to receive at least one strain measurement means, for example a strain gauge (not shown). The strain gauge may comprise six patches with two gauges each to install three full bridges to optimize the sensor output, when in use.

In a preferred embodiment of the holding structure 1 according to the present invention, the second connector 6 comprises a second 6c and a fourth 6d (not shown in Fig.1) substantially flat portion on opposite sides of the second connector 6. When in use in the multi-axis force-torque sensing device, the second connector 6 of the holding structure 1 may have several strain gauges mounted, for example, without being limited thereto, six patches with 2 gauges each, connected in a conventional Wheatstone bridge to form a second sensing circuit. This second sensing circuit, when in use, provides a second output signal responsive to a second force and power transmission path exerted between a test object 4 and the first clamping element 2 under a given equivalent resultant load applied at a central point A of the first aperture 2 and a central point B of the second aperture 3.

The second connector 6 of the holding structure 1 for a multi-axis force-torque sensing device according to the present invention, defines a second connector six DOF stiffness matrix. This second connector six DOF stiffness matrix describes the relationship between the displacement of the first end 6a and displacement of the second end 6b of the second connector 6 under a predetermined load applied at the central points A and B assuming a rigid connection between A and the first end 6a and a rigid connection between the second end 6b and B.

According to particular embodiments of the invention, the second connector 6 may have various shapes e.g., without being limited thereto, oval, squared, rectangular, T-shaped, I-shaped, etc. The second connector 6 may have a cross section which changes in the first direction (X-direction) between the first end 6a and the second end 6b. For example, the second connector 6 may have a square cross-section at the first 6a and second 6b end, where the cross section tapers in one direction to a rectangular cross section between the first 6a and second 6b end. The second connector 6 may take the form of a flexural hinge.

According to a preferred embodiment of the present invention, the second connector 6 is connected or coupled to a portion of the first inner facing surface 2d with a flexural hinge. This smooth transition between the second connector 6 and the first clamping element 2 minimizes stress concentrations. The second end 6b of the second connector 6 may also be connected or coupled to the second inner facing surface 3d in a smooth way using a flexural hinge.

Each diagonal element of the first connector six DOF stiffness matrix is less than each corresponding diagonal element of the first clamping element six DOF stiffness matrix with respect to the first connector 5, and each diagonal element of the first connector six DOF stiffness matrix is less than each corresponding diagonal element of the second clamping element six DOF stiffness matrix with respect to the first connector 5. When reference is made to "less" in this case, reference is made to at least one order of magnitude, preferably at least two orders of magnitude.

More generally, the first connector 5 has a connector stiffness which is smaller than the first clamping element stiffness, the second clamping element stiffness, and the test component stiffness. Due to the relative magnitudes of the connector stiffness matrix elements, in particular the diagonal elements, and the corresponding clamping element stiffness matrix elements, a force and/or torque transferred to the multi-axis force-torque sensing device at a coupling projection P1 and a coupling projection P2 (for example, when the sensing device is coupled to a test object at a projection P) can be transferred to the connector 5 without substantial effect on the clamping elements 2, 3. Thus by measuring at least one force component acting on the first connector 5, the at least one force component on a test object 4 can be determined.

For embodiments having two connectors 5,6, the stiffness matrix of the holding structure $K_M$ can be defined according to equation 7:

$$[k]_M \approx [k]_{conn1} + [k]_{conn2} \qquad (7)$$

As the diagonal elements of the first and second connector stiffness six DOF matrix are substantially smaller than the corresponding elements of the six DOF stiffness matrices of the first clamping element stiffness and the second clamping element, the measurement device six DOF stiffness matrix $K_M$ is approximately equal to the sum the six DOF stiffness matrix of the first and second connector. This allows the stiffness of the holding structure 1 to be considered approximately equal to the sum of the first and second connector stiffnesses. The clamping element stiffnesses do not need to be known exactly and do not need to be used in any calculation of the force or torque. It is sufficient that the first and second connector stiffness is substantially smaller than the first clamping element stiffness and the second clamping element stiffness.

Thus, coupling of a holding structure 1 according to embodiments of the present invention to a test object 4 does not significantly alter the stiffness properties of the test object 4. Advantageously, the use of this holding structure does not affect the system dynamics.

The test object 4 may be subject to one or more forces, which may be linear and/or rotational, which are desired to be measured. The principle that the effective stiffness is negligible as compared to the test object stiffness is generalized to a multidimensional description to include cross coupling effects. Such forces have a transmission path R in the test object 4 (Fig.2a), comprising points at which the test object 4 experiences the force. The holding structure 1 according to embodiments of the present invention provides an additional transmission path S in the sensing device 1, which can be thought of as being parallel to the transmission path R in the sense that the effective stiffness $k_{eff}$ can be considered to be in parallel with the test object stiffness $k_{test}$. For example, the measurement device stiffness may be less than 10%, less than 5%, less than 3%, less than 1% of the test object stiffness.

A multi-axis force-torque sensing device according to embodiments of the invention, comprises a holding structure 1 according to embodiments of the present invention, wherein the holding structure 1 may comprise at least one strain measuring means disposed on a first substantially flat portion 5c of the first connector 5. Strain measuring means may also be disposed on a second substantially flat portion 5d of the first connector 5, wherein the second substantially flat portion 5d is on the opposite side of the first substantially flat portion 5c of the first connector 5.

The multi-axis force-torque sensing device may also comprise a second connector 6 having a third substantially flat portion 6c configured to receive strain measuring means. The second connector 6 may also have a fourth substantially flat portion 6d on the opposite side of the third substantially flat portion 6c having strain measuring means disposed thereon. 1.

According to embodiments of the present invention, the third and fourth substantially planar portion of the second connector may extend radially from a central axis over a distance substantially equal to the second width $w_2$, wherein the central axis is defined by the center of the first aperture and the center of the second aperture.

The at least one strain measuring means may be for example, without being limited thereto, a strain sensor, a semiconductor strain sensor, a piezoelectric strain sensor, or a resistance-based strain sensor, or a surface acoustic wave based strain sensor or a combination thereof. The strain measuring means (not shown in the figures) is configured to output a voltage or current according to a local deformation in one or more directions. For example, the strain measurement means may comprise a resistance strain gauge having a force sensitivity in one or more different measurement directions. As the six DOF stiffness matrices of the first connector 5 and second connector 6 are independent of the clamping conditions with respect to the test object 4, a force $F$ in the measurement direction can be determined in dependence upon the measured deformation amount and the total stiffness of the holding structure 1 for the multi-axis force-torque sensing device.

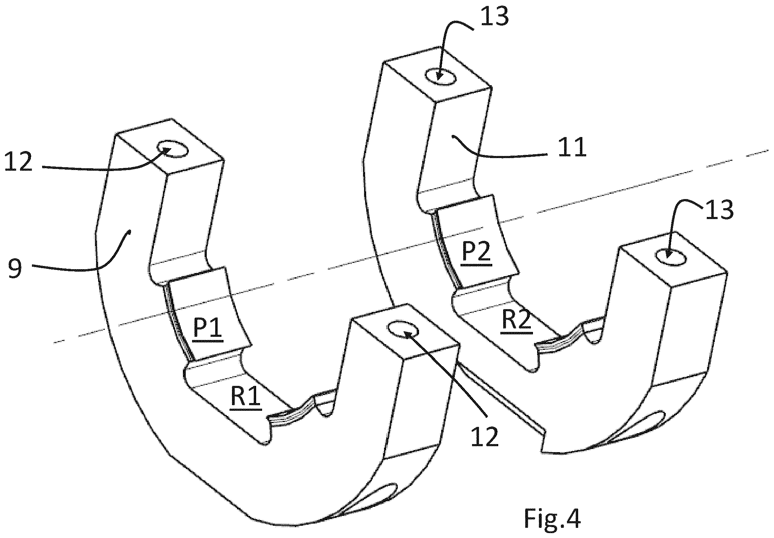

Referring to Fig.3, there is depicted a first monolithic structure of a holding structure 1 for a multi-axis force-torque sensing device according to embodiments of the present invention. This first monolithic structure may be defined by a first portion 8 of the first clamping element 2, at least one connector 5, 6, and a first portion 10 of the second clamping element 6. The first portion 8 of the first clamping element 2 comprises a first outer end and a second outer end, wherein both outer ends are configured to mechanically couple with a second portion 9 (Fig.4) of the first clamping element 2. Hence, the first portion 8 and the second portion 9 may be releasably connectable to each other. The outer ends of the first portion 8 may have half-open cavities configured, for example having an inner thread, to receive a fastening means, for example a bolt having an outer thread, wherein the inner thread is adapted to engage with the outer thread of the bolt. According to embodiments of the invention, the bolt may be dimensioned to require a certain preload force while taking up minimal space, i.e. maximizing length of the unthreaded portion as this determine the possible preload. According to a particular embodiment of the invention, the threaded portion is selected to be at least eight (8) times the pitch length which has the advantage of ensuring that the bolt is properly attached to the other clamping portion of the clamping element 2,3. Moreover, a monolithic or one-piece structure ensures a smooth predictable dynamic behavior of the holding structure 1 when a force or torque is applied. It is an advantage of the embodiment to decrease the chance for misalignments, stress concentrations and the need for larger components.

Referring to Fig.4, a perspective view of a second portion 9 and a third portion 11 of a first clamping element 2 and second clamping element 3, respectively, is demonstrated. These portions 9,11 may be monolithic structures. The second portion 9 of the first clamping element 2 may be defined as a portion releasably connectable to the first portion 8 of the first clamping element 2, wherein this first portion 8 is a corresponding first portion to the second portion 9. The second portion 9 has a first end portion and a second end portion adapted to mechanically couple with the first portion 8 (Fig.3) of the first clamping element 2. At least one end portion of the second portion 9 may have a through opening or cavity to receive an attaching means, for example a bolt, to releasable connect the first portion 8 to the second portion 9. A second portion 11 of the second clamping element may comprise similar or the same features for releasable connect or engage with the first portion 10 of the second clamping element 3. The second portion 11 of the second clamping element 3 may be defined as a portion releasably connectable to the first portion 10 of the second clamping element 3, wherein this first portion 10 is a corresponding first portion to the second portion 11 of the second clamping element 3.

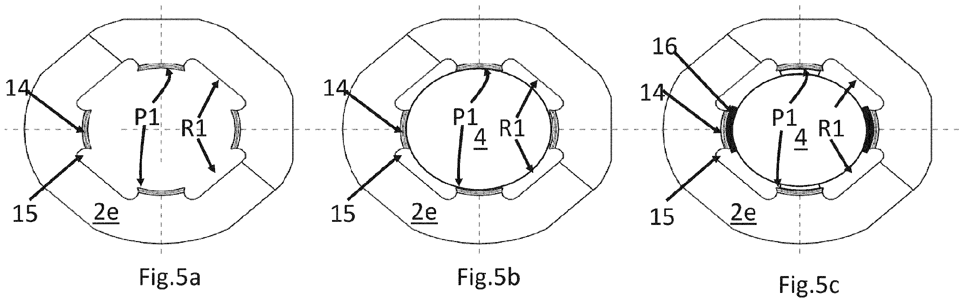

Fig.5a, Fig.5b and Fig.5c are axial views according to the first direction (X-direction) of the holding structure 1 according to embodiments of the invention, wherein Fig.5a depicts the outer facing surface of the first 2 or second 3 clamping element without the presence of a test object 4, whereas Fig.5b depicts the same structural elements as Fig.5a having a test object 4 clamped. The embodiment of the first or second clamping element of the holding structure 1 for a multi-axis force-torque sensing device shown in Fig.5 has an inner circumferential surface comprising four first coupling projections P1 circumferentially spaced apart by a plurality of first recesses R1, wherein two adjacent first coupling projection P1 are separated by a first recess R1. In specific embodiments of the invention, a first coupling projection P1 and a first recess R1 may be separated by a first concave shaped recess 15. The first concave shaped recesses 15 at both circumferential sides of the first coupling projection P1 may reduce contact peaks and overall stress near the connecting surfaces. Furthermore, the neck portion of the first coupling projection P1 may comprise stress relief grooves 14, which heavily reduces the contact peaks near the sides allowing for a larger pretension. The same structural and functional features are applicable to the second coupling projection P2 of the second clamping element 3. Fig.5c depicts at least the same structural elements as Fig.5b wherein the contact-engaged end portion surface of at least one first coupling projection P1 for mechanically coupling with a first outer surface portion of the test object 4 may comprise a spacer or structural element 16 adapted for reducing a size discrepancy between the first coupling projection P1 and the test object 4 in order to to guarantee a predetermined clamping force.

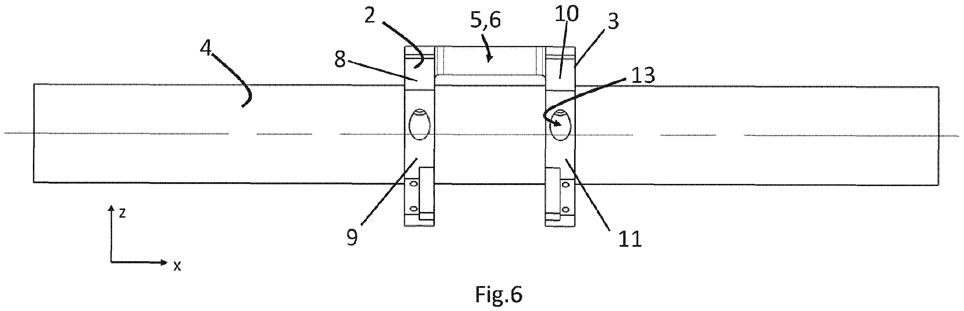

Referring to Fig.6, a side view of the holding structure 1 according to embodiments of the present invention comprising a test object 4 is shown. At least one end portion of the second portion 9,11 may have a through opening or cavity 12,13 to receive an attaching means, for example a bolt, to releasable connect the first portion 8,10 to the second portion 9,11.

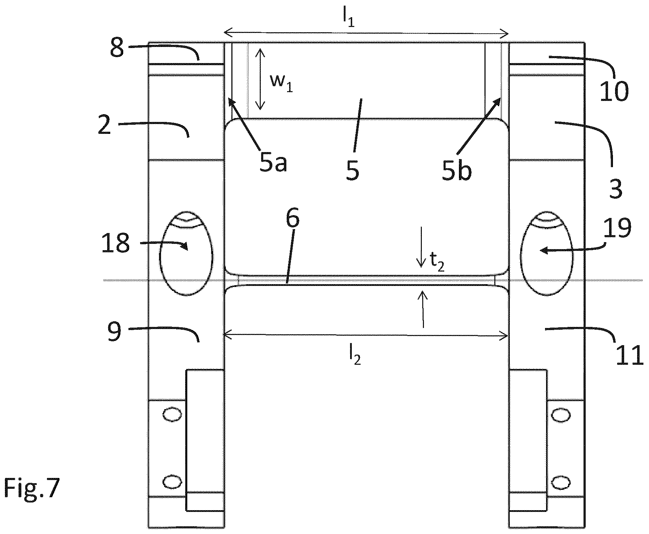

Referring to Fig.7, a side view of the holding structure for a multi-axis sensing device according to embodiments of the invention is shown. The first clamping element 2 is spaced apart in the first direction (X-direction) from the second clamping element 3, wherein a first connector 5 mechanically connects the first clamping element 2 with the second clamping element 3. This particular embodiment of the invention comprises also a second connector 6 mechanically coupling the first clamping element 2 with the second clamping element 3. The first clamping element 2 comprises a first portion 8 and a second portion 9 which are separable from each other. Each portion has a generally half-ring shape. The portions 8, 9 can be placed around the shaft of test object 4 and then coupled to each other using fastening means like, without being limited thereto, screws (not shown). The screws may be received in a holes or cavities 18 in the portions 8, 9. The second clamping element 9 may also comprises a first portion 10 and a second portion 11, releasable connectable to each other. The portions 10, 11 can be placed around the shaft of test object 4 and then coupled to each other using fastening means like, without being limited thereto, screws (not shown). The screws may be received in a holes or cavities 19 in the portions 10, 11. This separable configuration of the portions 8, 9, 10, 11 allows the holding structure 1 for a multi-axis force-torque sensing device to be easily coupled to and uncoupled from a test object without requiring the test object to be removed from the system. This also allows easy adjustment of the position of the holding structure at the circumference of the test object.

The first connector 5 extends between the first clamping element 2 and the second clamping element 6, having a first end 5a coupled to a first inner facing surface of the first clamping element 2 and a second end 5b coupled to a second inner facing surface of the second clamping element 6. The length $l_1$ of the first connector 5 is defined as the distance between the first end 5a and second end 5b.

In particular embodiments of the holding structure 1 of the invention, the first connector 5 has a rectangular cross-section substantially extending over its length $l_1$ defining a first and an opposed second substantially flat portion, both having a length $l_1$ and a first width w1. When reference is made to these portions, reference may also be made to substantially flat segments of the first connector 5. These flat portions, or segments, are adapted for receiving at least one strain measuring means. The thickness $t_1$ of the first connector 5 (not visible in Fig.7) is defined by the distance between the first substantially flat portion and the second substantially flat portion. The thickness $t_2$ of the second connector 5 is illustrated in Fig.7 and is defined in a similar way, i.e. the distance between the first and second substantially flat portions, or segments, of the second connector 6. In preferred embodiments of the present invention, the ration between the first width w1 and first thickness t1 of the first connector 5 is larger or equal to 5. In preferred embodiments of the present invention comprising, the ration between the second width $l_2$ and second thickness $t_2$ of the second connector 5 is larger or equal to 5.

According to a specific embodiment of the present invention, the first width $w_1$ of the surface 2a and the first outer circumferential surface 2c of the first clamping element 2.

In-situ measurement of force and/or torque on a test object may proceed as follows. The multi-axis force-torque sensing device comprising a holding structure according to embodiments of the invention is clamped to the test object, which may be comprised in an engine or other machinery. Strain measurements are sent from the sensor(s) to a processing device (not shown) such as a computer or embedded processing unit comprising a memory unit, for example by a wired or wireless connection between the sensors and the processing device. The strain measurements may be continuously provided to the processing device or may be provided "on-demand", such as in response to a signal from the processing device. The strain measurements are received by the processing device, which stores the calibration matrix in the memory unit, for example as determined during a calibration process as described herein. The processing device calculates the forces and torques on the sensing device in dependence upon the received strain values and using the calibration matrix. The processing device may provide the forces and torques as output, for example to a control system configured to control a system comprising the test object and/or as a visual and/or audio output.

According to embodiments of the present invention of a multi-axis force-torque sensing device, a strain sensor (not shown) is disposed on the first connector 5 between the first 5a and second 5b ends, on one of the substantially flat or planar faces of the connector. Thus the force-torque sensing device, comprising one strain sensor, is capable of measuring a force component in at least one direction. For example, a single strain sensor may be capable of measuring strain in more than one direction.

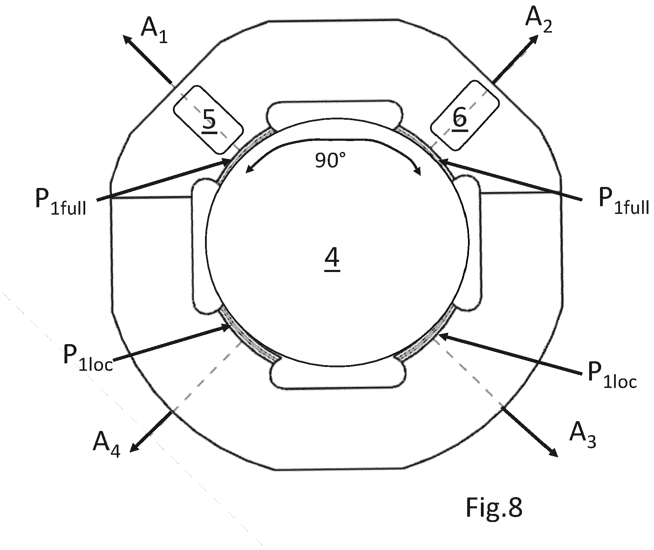

A multi-axis force-torque sensing device according to embodiments of the present invention may comprise more than one connector. For example, referring to Fig.8, due to the angular distribution and appropriate choice of orientation of each connector 5,6, and first coupling projections P1 force components in three perpendicular directions can be measured. An example orientation of connectors is shown in Figure 5, where each arrow $A_1$, $A_2$, $A_3$, $A_4$ denotes the direction of the normal force responsible for the clamping of the clamping element to the test object when coupled.

First P1 and second P2 coupling projections having a neck portion adjacent to the end points of a connector, comprise contact-engaged end portions adapted to maximize the mechanically coupling or contact with a portion of the outer surface of the test object 4. These coupling projections are annotated as $P1_{full}$ in Fig.8. The outer contact surface of these coupling projections may be in full contact with the outer surface of the test object 4. Other coupling projections $P1_{loc}$ disposed on the inner circumferential surface of a clamping element may be adapted to engage with the test object 4 to resemble a localized line or point contact. According to particular embodiments of the present invention, each clamping element 2,3 may comprise a predetermined number of full surface contact coupling projections $P1_{full}$ wherein this predetermined number is at least equal to the number of connectors between the clamping elements of the holding structure.

In some embodiments, two or more connectors 5,6 can be used. Any circumferential distribution of connectors can be used, for example the angular separation of adjacent connectors is not limited to 90°. Preferably, the angular separation between two adjacent connectors is at least 45°. If two connectors are used, then preferably the primary axes of the strain sensors disposed on the connectors are substantially perpendicular to each other.

In embodiments wherein two or more connectors are used, each connector has the stiffness matrix properties as described hereinbefore with respect to the first connector 5. That is, each connector 6 has a six DOF stiffness matrix, and for each stiffness matrix individually, each diagonal stiffness matrix element is less than each corresponding element of the six DOF stiffness matrices of the first and the second clamping elements with respect to the connector in question.

In some applications, due to system dynamics such as motion to which the test object is subjected, both the test object and the sensing device can experience inertial forces which scale with the velocity, acceleration and inertial properties of the test object. Such inertial forces can impact the statically determined force measurements as described hereinbefore.

To account for these forces, according to embodiments of the present invention the acceleration of the respective bodies can be estimated. For example, in some embodiments the multi-axis force-torque sensing device comprises one additional strain gauge, and/or one additional accelerometer and/or inertial measurement unit for each to be identified acceleration component to account for the inertial contribution. The additional strain gauge, accelerometer, and/or inertial measurement unit is preferably attached to the first or the second clamping element or integrated into a printed circuit board. According to particular embodiments of the present invention, these additional measurement means are disposed on the substantially flat or planar surfaces of the first and/or second recesses disposed in between adjacent coupling projections.

The multi-axis force-torque sensing device optionally comprises a first accelerometer disposed on the first clamping element 2. The sensing device optionally comprises a second accelerometer disposed on the second clamping element 3. The first and/or second accelerometers are configured to measure an acceleration in one or more perpendicular directions. A sensing device according to embodiments of the present invention comprising one or more accelerometers 7, 8 is capable of estimating the velocity and by extension the power in one or more perpendicular directions. As the acceleration in all directions except the rotation about the x axis has a zero mean, the velocity can be calculated through integration to determine the power in a particular direction. The rotational velocity can be derived from the radial acceleration based on the kinematic description.

The multi-axis force-torque sensing device can therefore measure six DOF components for both force and power.

The multi-axis force-torque sensing device optionally comprises one or more temperature sensors. The one or more temperature sensors may be used to correct measurements of the strain sensors in the presence of temperature variations. For example, a first temperature sensor may be disposed on the first clamping element and a second temperature sensor may be disposed on the second clamping element. A temperature value at a sensor between the first clamping element and the second clamping element may be determined based on measurements from the first temperature sensor and the second temperature sensor, for example by interpolation. Temperature correction can be advantageous for example when a resistance-based strain sensor is used, as the resistance of wires comprised in the strain sensor can be influenced by a change in temperature.

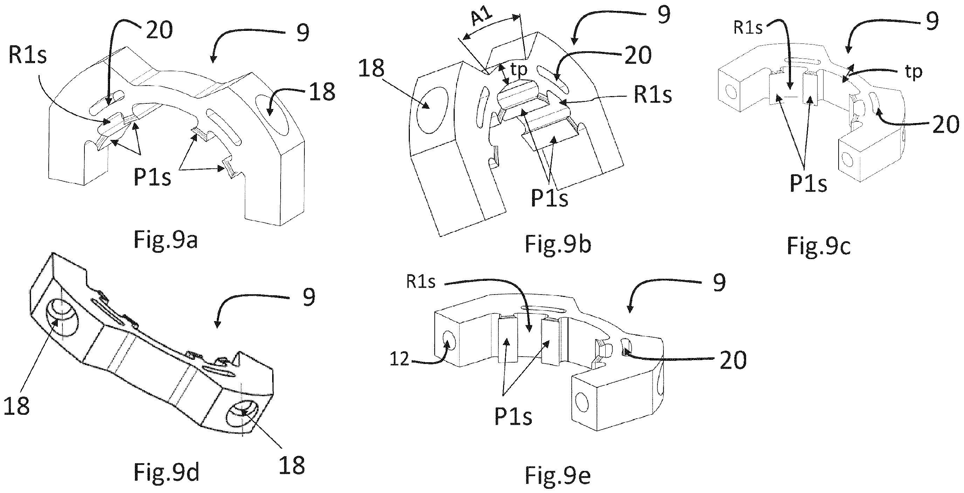

Referring to Fig.9a, 9b, 9c, 9d and 9e, different perspective views of second portions 9 or third portions 11 of respectively a first 2 or second 3 clamping element according to specific embodiments of the present invention are demonstrated. These portions 9,11 may be monolithic structures. For clarity purposes, only the second portion 9 of the first clamping element 2 has been shown in Fig.9a-9e and described in the following. It should be understood that a similar description may be applied to a third portion 11 of a second clamping element 3. The second portion 9 of the first clamping element 2 may be defined as a portion releasably connectable to the first portion 8 of the first clamping element 2, wherein this first portion 8 is a corresponding first portion to the second portion 9. The second portion 9 has a first end portion and a second end portion adapted to mechanically couple with the first portion 8 (Fig.3) of the first clamping element 2. At least one end portion of the second portion 9 may have a through opening or cavity to receive an attaching means, for example a bolt, to releasable connect the first portion 8 to the second portion 9. Referring to Fig.9a, 9b, 9c, 9d and 9e, different perspective views of second portions 9 or third portions 11 of respectively a first 2 or second 3 clamping element according to specific embodiments of the present invention are demonstrated. These portions 9,11 may be monolithic structures. For clarity purposes, only the second portion 9 of the first clamping element 2 has been shown in Fig.9a-9e and described in the following. It should be understood that a similar description may be applied to a third portion 11 of a second clamping element 3. The second portion 9 of the first clamping element 2 may be defined as a portion releasable connectable to the first portion 8 of the first clamping element 2, wherein this first portion 8 is a corresponding first portion to the second portion 9. The second portion 9 has a first end portion and a second end portion adapted to mechanically couple with the first portion 8 (Fig.3) of the first clamping element 2. At least one end portion of the second portion 9 may have a through opening or cavity to receive an attaching means, for example a bolt, to releasable connect the first portion 8 to the second portion 9.

According to specific embodiments of the present invention, the first P1 coupling projection may comprise a plurality of coupling projections P1s having the advantage of increasing the number of contact patches. For example, due to the plurality of coupling projections P1s, the number of contact patches, i.e. surfaces adapted to be in direct contact with an outer surface of a test object, may be increased from, for example, four contact patches as demonstrated in Fig.1 for the first clamping element 2 shown, to eight contact patches as illustrated in Fig.9a-9e. This increase in coupling projections P1, P1s may result in a higher predictability on the connection between a clamping element and a test object in view of geometric uncertainties. Each coupling projection of a plurality of the coupling projections P1s may be separated from its neighboring coupling projection by a coupling projection recess R1s.

According to specific embodiments of the present invention as demonstrated in Fig.9a-9e, the clamping element may have a predetermined thickness tp, measured radially outward at the location of a first and/or second recess of the plurality of recesses R, and an arc length A1 measured over the recess between the contact patches to allow for a larger or smaller shaft due to the bending flexibility of the holding structure for a multi-axis force-torque sensing device for measuring at least one force-torque component on a test object. As the bending flexibility may increase with a smaller thickness tp and a larger arc length A1, the thickness tp may increase proportionally with increasing arc length A1 whereas the arc length A1 may increase with the diameter of the test object.

According to specific embodiments of the present invention and as illustrated in Fig.9a-9e, the inner facing and/or outer facing surface of each clamping element of the holding structure may further comprise a first recessed portion 20, wherein the first recessed portion may circumferentially extend along at least a portion of the inner and/or outer facing surface positioned over a recess between two adjacent coupling projections.

According to specific embodiments of the invention, the first recessed portion may be a through-opening extending in parallel with the central axis 7 (not shown in Fig.9a-9e) extending from the inner facing surface to the outer facing surface. It is an advantage of embodiments having a first recessed portion 20 to increase the flexibility of the clamping element allowing it to increase compatibility with the test object, for example, the first 5 and/or second connector 6 (not shown in Fig.9a-9e).

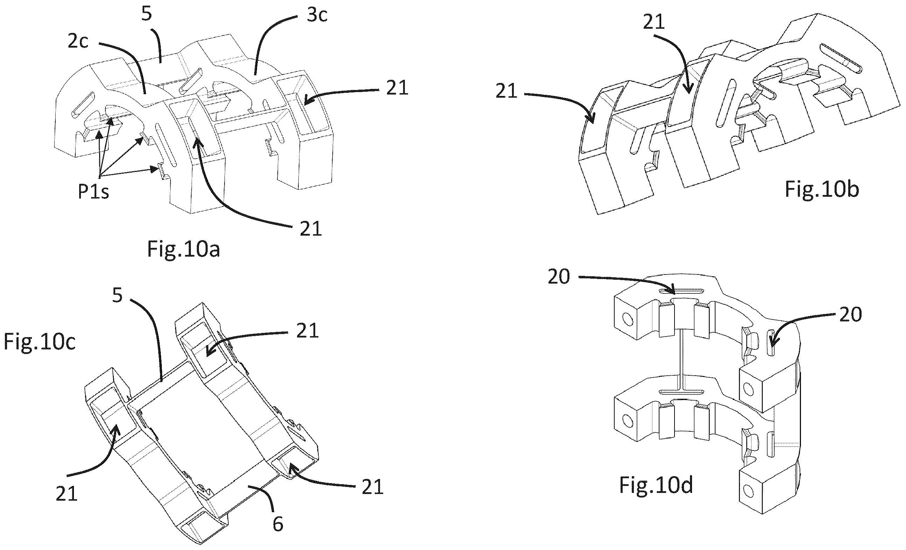

Referring to Fig.10a-10d, different perspective views of a monolithic structure of a portion of the holding structure according to embodiments of the present invention are illustrated. It should be understood that the features previously discussed, for example in relation with Fig.4, can be included with the features discussed in the following description. The first 2c and second 3c outer circumferential surface of respectively the first and second clamping element, may further comprise a second recessed portion 21, wherein the first recessed portion 21 may be disposed opposite to a coupling projection P1, P1s disposed on the inner circumferential surface. It is an advantage of embodiments having a second recessed portion 21 to reduce the 6DOF stiffness of a connector, for example, the first 5 and/or second connector 6 and to increase compatibility with a test object.

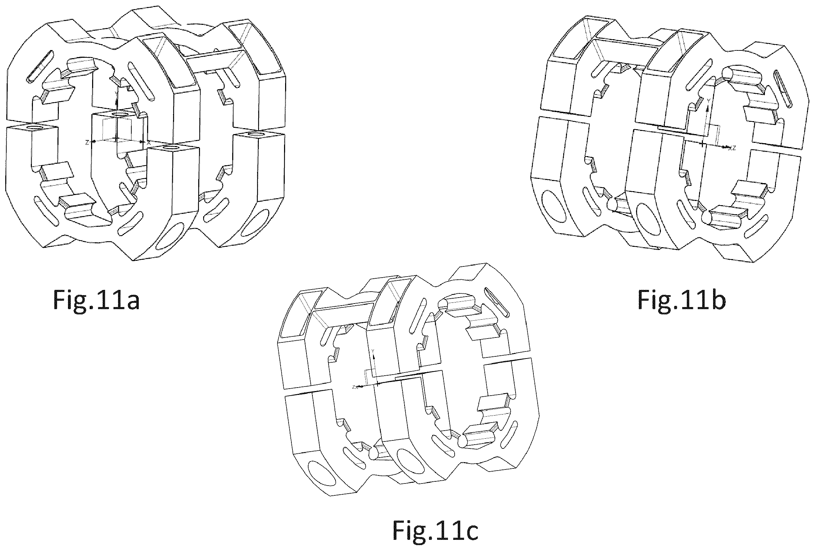

Referring to Fig.11a-11c, different perspective views of a holding structure according to specific embodiments of the present invention before the monolithic structure is brought into direct contact with a portion of the corresponding clamping element are shown. Reference is made to the above description in view of Fig.9a-9e and Fig.10a-10d for a description of the different features and its related advantages.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways within the scope defined by the claims. The invention is not limited to the disclosed embodiments but only by the claims.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A holding structure (1) for a multi-axis force-torque sensing device for measuring at least one force-torque component on a test object (4), the holding structure comprising:

   - a first clamping element (2) comprising :

      a first inner circumferential surface (2a) extending in a first direction (X-direction) and defining a first aperture (2b) for receiving a portion of the test object;
      a first outer circumferential surface (2c) opposed to and radially spaced apart from the first inner circumferential surface;
      a plurality of first coupling projections (P1) disposed on the first inner circumferential surface and circumferentially spaced apart by a plurality of first recesses (R1), wherein the first coupling projection has a contact engageable portion for mechanically coupling with a first outer surface portion of the test object;

   - a second clamping element (3) comprising

      a second inner circumferential surface (3a) extending in the first direction and defining a second aperture (3b) for receiving a portion of the test object
      a second outer circumferential surface (3c) extending in the first direction and opposed to and radially spaced apart from the second inner circumferential surface
      a plurality of second coupling projections (P2) disposed on the second inner circumferential surface and circumferentially spaced apart by a plurality of second recesses (R2), wherein the second coupling projection has a contact engageable portion for mechanically coupling with a second outer surface portion of the test object;

      - a first connector (5) having a first end (5a) coupled to a first inner facing surface (2d) of the first clamping element (2) and a second end (5b) coupled to a second inner facing surface (3d) of the second clamping element (3), wherein the first inner facing surface extends between first inner circumferential surface and the first outer circumferential surface and faces the second clamping element, wherein the second inner facing surface extends between second inner circumferential surface and the second outer circumferential surface and faces the first clamping element, wherein the first connector further comprises a first substantially planar portion (5c) having a first width $w_1$ for receiving strain measuring means, wherein the first substantially planar portion is located in a first plane, and wherein the first connector has a first connector six degree-of-freedom stiffness matrix; wherein the first clamping element, when clamped to the test object, has a first clamping element six degree-of-freedom stiffness matrix with respect to the first connector;

wherein the second clamping element, when clamped to the test object, has a second clamping element six degree-of-freedom stiffness matrix with respect to the first connector; and
wherein each diagonal element of the first connector six degree-of-freedom stiffness matrix is less than each corresponding diagonal element of the first clamping element six degree-of-freedom stiffness matrix with respect to the first connector, and wherein each diagonal element of the first connector six degree-of-freedom stiffness matrix is less than each corresponding diagonal element of the second clamping element six degree-of-freedom stiffness matrix with respect to the first connector.

2. The holding structure according to Claim 1, wherein the first and second clamping elements each comprise a first portion and a second portion releasably connectable to the corresponding first portion.

3. The holding structure according to Claim 2, wherein the first portion of the first clamping element, the first portion of the second clamping element and the first connector define a first monolithic structure.

4. The holding structure according to Claim 1 or Claim 2, wherein the coupling between the first end of the first connector and the first inner facing surface of the first clamping element is a glued, welded, or adhesively bonded connection.

5. The holding structure according to any of Claim 1 to Claim 4, wherein the first connector further comprises a second substantially planar portion at the opposite side of the first substantially planar portion, wherein the distance between the planar portions defines a first connector thickness $t_1$, and wherein the ratio between the first width $w_1$ of the first connector and the first connector thickness $t_1$ is substantially equal to or larger than 5.

6. The holding structure according to any of Claim 1 to Claim 5, further comprising a second connector having a first end coupled to the first inner facing surface of the first clamping element and a second end coupled to the second inner facing surface of the second clamping element, wherein the second connector is circumferentially spaced apart from the first connector, wherein the second connector further comprises a third substantially planar portion having a second width $w_2$ located in a second plane for receiving strain measuring means, wherein the second connector has a second connector six degree-of-freedom stiffness matrix,

wherein the first clamping element has a first clamping element six degree-of-freedom stiffness matrix with respect to the second connector,
wherein the second clamping element has a second clamping element six degree-of-freedom stiffness matrix with respect to the second connector; and
wherein each diagonal element of the second connector six degree-of-freedom stiffness matrix is less than each corresponding diagonal element of the first clamping element six degree-of-freedom stiffness matrix with respect to the second connector, and wherein each diagonal element of the second connector six degree-of-freedom stiffness matrix is less than each corresponding diagonal element of the second clamping element six degree-of-freedom stiffness matrix with respect to the first connector.

7. The holding structure according to any one of Claim 1 to Claim 6, wherein the contact engageable portion of at least one of the plurality of first and second coupling projections comprises a spacer or structural element adapted for, when in use, reducing a size discrepancy between the coupling projection and the test object.

8. The holding structure according to any one of Claim 1 to Claim 7, wherein the first substantially planar portion of the first connector is radially extending from a central axis over a distance substantially equal to the first width $w_1$, wherein the central axis is defined by the centre of the first aperture and the centre of the second aperture.

9. The holding structure according to any one of Claim 1 to Claim 8, wherein a selection of the first and second coupling projections comprising a neck portion having stress relief grooves.

10. The holding structure according to any one of the Claim 6 to Claim 9, the angular separation between the first connector and the second connector is at least 30 degrees, in particular substantially equal to 45 degrees, and more in particular substantially equal to 90 degrees.

11. The holding structure according to any one of Claim 6 to Claim 10, wherein the second connector further comprises a fourth substantially planar portion at the opposite side of the third substantially planar portion, wherein the distance between the planar portions defines a second connector thickness $t_2$, and wherein the ratio between the second width $w_2$ of the second connector and the second connector thickness $t_2$ is substantially equal to or larger than 5.

12. A multi-axis force-torque sensing device for measuring at least one force-torque component on a test object, comprising a holding structure according to any of Claim 1 to Claim 11 for holding the test object, and further comprising at least one strain measuring means disposed on at least one connector, wherein the strain measuring means is selected from the group consisting of a semiconductor strain sensor, a piezoelectric strain sensor, a resistance-based strain sensor or a surface acoustic wave based strain sensor

13. The multi-axis force-torque sensing device according to Claim 12, further comprising at least one accelerometer.

14. A method of determining at least one force-torque component acting on a test component in at least one direction, comprising the steps of:

   providing a multi-axis force-torque sensing device according to any of Claim 12 or Claim 13;
   securing the holding structure of the multi-axis force-torque sensing device to the test object;
   receiving at least one strain measurement from the multi-axis force-torque sensing device; and
   determining at least one force-torque component based on the received at least one strain measurement.

15. The method according to Claim 14, wherein the step of securing the holding structure of the multi-axis force-torque sensing device to the test object comprises a step of mechanically coupling the holding structure to the test object such that the first clamping element has a first clamping element coupling six degree-of-freedom stiffness matrix with respect to the test object, and such that the second clamping element has a second clamping element coupling six degree-of-freedom stiffness matrix with respect to the test object, wherein each diagonal element of the first connector six degree-of-freedom stiffness matrix is less than each corresponding diagonal element of the first clamping element six degree-of-freedom stiffness matrix with respect to the first connector, and wherein each diagonal element of the first connector six degree-of-freedom stiffness matrix is less than each corresponding diagonal element of the second clamping element six degree-of-freedom stiffness matrix with respect to the first connector.

**Patentansprüche**

1. Eine Haltestruktur (1) für eine mehrachsige Kraft-Drehmoment-Sensorvorrichtung zum Messen mindestens einer Kraft-Drehmoment-Komponente an einem Testobjekt (4), wobei die Haltestruktur umfasst:

   - ein erstes Klemmelement (2), umfassend:

   eine erste innere Umfangsfläche (2a), die sich in eine erste Richtung (X-Richtung) erstreckt und eine erste Öffnung (2b) zum Aufnehmen eines Abschnitts des Testobjekts definiert;
   eine erste äußere Umfangsfläche (2c), die der ersten inneren Umfangsfläche gegenüberliegt und radial von dieser beabstandet ist;
   eine Vielzahl von ersten Kopplungsvorsprüngen (P1), die auf der ersten inneren Umfangsfläche angeordnet und in Umfangsrichtung durch eine Vielzahl von ersten Aussparungen (R1) voneinander beabstandet sind, wobei der erste Kopplungsvorsprung einen Kontakteingriffsabschnitt zur mechanischen Kopplung mit einem ersten äußeren Oberflächenabschnitt des Testobjekts aufweist;

   - ein zweites Klemmelement (3), umfassend

   eine zweite innere Umfangsfläche (3a), die sich in die erste Richtung erstreckt und eine zweite Öffnung (3b) zum Aufnehmen eines Abschnitts des Testobjekts definiert
   eine zweite äußere Umfangsfläche (3c), die sich in die erste Richtung erstreckt und der zweiten inneren Umfangsfläche gegenüberliegt und radial von dieser beabstandet ist
   eine Vielzahl von zweiten Kopplungsvorsprüngen (P2), die auf der zweiten inneren Umfangsfläche angeordnet und in Umfangsrichtung durch eine Vielzahl von zweiten Aussparungen (R2) voneinander beabstandet sind, wobei der zweite Kopplungsvorsprung einen Kontakteingriffsabschnitt zur mechanischen Kopplung mit einem zweiten äußeren Oberflächenabschnitt des Testobjekts aufweist;

   - einen ersten Verbinder (5) mit einem ersten Ende (5a), das mit einer ersten nach innen gerichteten Oberfläche (2d) des ersten Klemmelements (2) gekoppelt ist, und einem zweiten Ende (5b), das mit einer zweiten nach innen gerichteten Oberfläche (3d) des zweiten Klemmelements (3) gekoppelt ist, wobei sich die erste nach innen gerichtete Oberfläche zwischen der ersten inneren Umfangsfläche und der ersten äußeren Umfangsfläche erstreckt und dem zweiten Klemmelement zugewandt ist, wobei sich die zweite nach innen gerichtete Oberfläche zwischen der zweiten inneren Umfangsfläche und der zweiten äußeren Umfangsfläche erstreckt und dem ersten Klemmelement zugewandt ist, wobei der erste Verbinder weiter einen ersten im Wesentlichen ebenen Abschnitt (5c) mit einer ersten Breite $w_1$ zum Aufnehmen von Dehnungsmessmitteln umfasst, wobei sich der erste im Wesentlichen ebene Abschnitt in einer ersten Ebene befindet, und wobei der erste Verbinder eine Steifigkeitsmatrix mit sechs Freiheitsgraden des ersten Verbinders aufweist;

wobei das erste Klemmelement, wenn es an das Testobjekt geklemmt ist, eine Steifigkeitsmatrix mit sechs Freiheitsgraden des ersten Klemmelements in Bezug auf den ersten Verbinder aufweist;
wobei das zweite Klemmelement, wenn es an das Testobjekt geklemmt ist, eine Steifigkeitsmatrix mit sechs Freiheitsgraden des zweiten Klemmelements in Bezug auf den ersten Verbinder aufweist; und
wobei jedes Diagonalelement der Steifigkeitsmatrix mit sechs Freiheitsgraden des ersten Verbinders kleiner ist als jedes entsprechende Diagonalelement der Steifigkeitsmatrix mit sechs Freiheitsgraden des ersten Klemmelements in Bezug auf den ersten Verbinder, und wobei jedes Diagonalelement der Steifigkeitsmatrix mit sechs Freiheitsgraden des ersten Verbinders kleiner ist als jedes entsprechende Diagonalelement der Steifigkeitsmatrix mit sechs Freiheitsgraden des zweiten Klemmelements in Bezug auf den ersten Verbinder.

2. Die Haltestruktur nach Anspruch 1, wobei das erste und das zweite Klemmelement jeweils einen ersten Abschnitt und einen zweiten Abschnitt, der lösbar mit dem entsprechenden ersten Abschnitt verbindbar ist, umfassen.

3. Die Haltestruktur nach Anspruch 2, wobei der erste Abschnitt des ersten Klemmelements, der erste Abschnitt des zweiten Klemmelements und der erste Verbinder eine erste monolithische Struktur definieren.

4. Die Haltestruktur nach Anspruch 1 oder Anspruch 2, wobei die Kopplung zwischen dem ersten Ende des ersten Verbinders und der ersten nach innen gerichteten Oberfläche des ersten Klemmelements eine geklebte, geschweißte oder verklebte Verbindung ist.

5. Die Haltestruktur nach einem von Anspruch 1 bis Anspruch 4, wobei der erste Verbinder weiter einen zweiten im Wesentlichen ebenen Abschnitt auf der gegenüberliegenden Seite des ersten im Wesentlichen ebenen Abschnitts umfasst, wobei der Abstand zwischen den ebenen Abschnitten eine erste Verbinderdicke $t_1$ definiert und wobei das Verhältnis zwischen der ersten Breite $w_1$ des ersten Verbinders und der ersten Verbinderdicke $t_1$ im Wesentlichen gleich oder größer als 5 ist.

6. Die Haltestruktur nach einem von Anspruch 1 bis Anspruch 5, die weiter einen zweiten Verbinder mit einem ersten Ende, das mit der ersten nach innen gerichteten Oberfläche des ersten Klemmelements gekoppelt ist, und einem zweiten Ende, das mit der zweiten nach innen gerichteten Oberfläche des zweiten Klemmelements gekoppelt ist, umfasst, wobei der zweite Verbinder in Umfangsrichtung vom ersten Verbinder beabstandet ist, wobei der zweite Verbinder weiter einen dritten im Wesentlichen ebenen Abschnitt mit einer zweiten Breite $w_2$ umfasst, der sich in einer zweiten Ebene befindet, um Dehnungsmessmittel aufzunehmen, wobei der zweite Verbinder eine Steifigkeitsmatrix mit sechs Freiheitsgraden des zweiten Verbinders aufweist,

wobei das erste Klemmelement eine Steifigkeitsmatrix mit sechs Freiheitsgraden des ersten Klemmelements in Bezug auf den zweiten Verbinder aufweist,
wobei das zweite Klemmelement eine Steifigkeitsmatrix mit sechs Freiheitsgraden des zweiten Klemmelements in Bezug auf den zweiten Verbinder aufweist; und
wobei jedes Diagonalelement der Steifigkeitsmatrix mit sechs Freiheitsgraden des zweiten Verbinders kleiner ist als jedes entsprechende Diagonalelement der Steifigkeitsmatrix mit sechs Freiheitsgraden des ersten Klemmelements in Bezug auf den zweiten Verbinder, und wobei jedes Diagonalelement der Steifigkeitsmatrix mit sechs Freiheitsgraden des zweiten Verbinders kleiner ist als jedes entsprechende Diagonalelement der Steifigkeitsmatrix mit sechs Freiheitsgraden des zweiten Klemmelements in Bezug auf den ersten Verbinder.

7. Die Haltestruktur nach einem von Anspruch 1 bis Anspruch 6, wobei der Kontakteingriffsabschnitt von mindestens einem der Vielzahl von ersten und zweiten Kopplungsvorsprüngen ein Abstandsstück oder Strukturelement umfasst, das dazu geeignet ist, bei Verwendung eine Größenabweichung zwischen dem Kopplungsvorsprung und dem Testobjekt zu verringern.

8. Die Haltestruktur nach einem von Anspruch 1 bis Anspruch 7, wobei sich der erste im Wesentlichen ebene Abschnitt des ersten Verbinders radial von einer Mittelachse über eine Distanz erstreckt, die im Wesentlichen gleich der ersten Breite $w_1$ ist, wobei die Mittelachse durch die Mitte der ersten Öffnung und die Mitte der zweiten Öffnung definiert ist.

9. Die Haltestruktur nach einem von Anspruch 1 bis Anspruch 8, wobei eine Auswahl der ersten und zweiten Kopplungsvorsprünge einen Halsabschnitt umfasst, der Spannungsentlastungsnuten aufweist.

10. Die Haltestruktur nach einem von Anspruch 6 bis Anspruch 9, wobei der Winkelabstand zwischen dem ersten Verbinder und dem zweiten Verbinder mindestens 30 Grad beträgt, insbesondere im Wesentlichen gleich 45 Grad und ganz besonders im Wesentlichen gleich 90 Grad ist.

11. Die Haltestruktur nach einem von Anspruch 6 bis Anspruch 10, wobei der zweite Verbinder weiter einen vierten im Wesentlichen ebenen Abschnitt auf der gegenüberliegenden Seite des dritten im Wesentlichen ebenen Abschnitts umfasst, wobei der Abstand zwischen den ebenen Abschnitten eine zweite Verbinderdicke $t_2$ definiert und wobei das Verhältnis zwischen der zweiten Breite $w_2$ des zweiten Verbinders und der zweiten Verbinderdicke $t_2$ im Wesentlichen gleich oder größer als 5 ist.

12. Eine mehrachsige Kraft-Drehmoment-Sensorvorrichtung zum Messen mindestens einer Kraft-Drehmoment-Komponente an einem Testobjekt, die eine Haltestruktur nach einem von Anspruch 1 bis Anspruch 11 zum Halten des Testobjekts umfasst und weiter mindestens ein Dehnungsmessmittel umfasst, das an mindestens einem Verbinder angeordnet ist, wobei das Dehnungsmessmittel aus der Gruppe ausgewählt ist, die aus einem Halbleiter-Dehnungssensor, einem piezoelektrischen Dehnungssensor, einem widerstandsbasierten Dehnungssensor oder einem auf Oberflächenschallwellen basierenden Dehnungssensor besteht.

13. Die mehrachsige Kraft-Drehmoment-Sensorvorrichtung nach Anspruch 12, die weiter mindestens einen Beschleunigungsmesser umfasst.

14. Ein Verfahren zum Bestimmen mindestens einer Kraft-Drehmoment-Komponente, die auf eine Testkomponente in mindestens einer Richtung einwirkt, umfassend die Schritte zum:

    Bereitstellen einer mehrachsigen Kraft-Drehmoment-Sensorvorrichtung nach einem von Anspruch 12 oder Anspruch 13;
    Befestigen der Haltestruktur der mehrachsigen Kraft-Drehmoment-Sensorvorrichtung am Testobjekt;
    Empfangen mindestens einer Dehnungsmessung von der mehrachsigen Kraft-Drehmoment-Sensorvorrichtung; und
    Bestimmen mindestens einer Kraft-Drehmoment-Komponente basierend auf der empfangenen mindestens einen Dehnungsmessung.

15. Das Verfahren nach Anspruch 14, wobei der Schritt des Befestigens der Haltestruktur der mehrachsigen Kraft-Drehmoment-Sensorvorrichtung an dem Testobjekt einen Schritt des mechanischen Koppelns der Haltestruktur an das Testobjekt umfasst, so dass das erste Klemmelement eine Kopplungs-Steifigkeitsmatrix mit sechs Freiheitsgraden des ersten Klemmelements in Bezug auf das Testobjekt aufweist, und so dass das zweite Klemmelement eine Kopplungs-Steifigkeitsmatrix mit sechs Freiheitsgraden des zweiten Klemmelements in Bezug auf das Testobjekt aufweist, wobei jedes Diagonalelement der Steifigkeitsmatrix mit sechs Freiheitsgraden des ersten Verbinders kleiner ist als jedes entsprechende Diagonalelement der Steifigkeitsmatrix mit sechs Freiheitsgraden des ersten Klemmelements in Bezug auf den ersten Verbinder, und wobei jedes Diagonalelement der Steifigkeitsmatrix mit sechs Freiheitsgraden des ersten Verbinders kleiner ist als jedes entsprechende Diagonalelement der Steifigkeitsmatrix mit sechs Freiheitsgraden des zweiten Klemmelements in Bezug auf den ersten Verbinder.

**Revendications**

1. Une structure de maintien (1) pour un dispositif de détection de force-couple multi-axes pour mesurer au moins un composant de force-couple sur un objet de test (4), la structure de maintien comprenant :

    - un premier élément de serrage (2) comprenant :

        une première surface circonférentielle interne (2a) s'étendant dans une première direction (direction X) et définissant une première ouverture (2b) pour recevoir une partie de l'objet de test ;

une première surface circonférentielle externe (2c) opposée à et espacée radialement de la première surface circonférentielle interne ;

une pluralité de premières saillies de couplage (P1) disposées sur la première surface circonférentielle interne et espacées circonférentiellement par une pluralité de premiers évidements (R1), dans lequel la première saillie de couplage a une partie engageable en contact pour un couplage mécanique avec une première partie de surface externe de l'objet de test ;

- un deuxième élément de serrage (3) comprenant :

une deuxième surface circonférentielle interne (3a) s'étendant dans la première direction et définissant une deuxième ouverture (3b) pour recevoir une partie de l'objet de test ;

une deuxième surface circonférentielle externe (3c) s'étendant dans la première direction et opposée à et espacée radialement de la deuxième surface circonférentielle interne ;

une pluralité de deuxièmes saillies de couplage (P2) disposées sur la deuxième surface circonférentielle interne et espacées circonférentiellement par une pluralité de deuxièmes évidements (R2), dans lequel la deuxième saillie de couplage a une partie engageable en contact pour un couplage mécanique avec une deuxième partie de surface externe de l'objet de test ;

- un premier connecteur (5) ayant une première extrémité (5a) couplée à une première surface interne faisant face (2d) du premier élément de serrage (2) et une deuxième extrémité (5b) couplée à une deuxième surface interne faisant face (3d) du deuxième élément de serrage (3), dans lequel la première surface interne faisant face s'étend entre la première surface circonférentielle interne et la première surface circonférentielle externe et fait face au deuxième élément de serrage, dans lequel la deuxième surface interne faisant face s'étend entre la deuxième surface circonférentielle interne et la deuxième surface circonférentielle externe et fait face au premier élément de serrage, dans lequel le premier connecteur comprend en outre une première partie sensiblement plane (5c) ayant une première largeur $w_1$ pour recevoir des moyens de mesure de déformation, dans lequel la première partie sensiblement plane est située dans un premier plan, et dans lequel le premier connecteur a une matrice de rigidité à six degrés de liberté du premier connecteur ;

dans lequel le premier élément de serrage, lorsqu'il est serré sur l'objet de test, a une matrice de rigidité à six degrés de liberté du premier élément de serrage par rapport au premier connecteur ;

dans lequel le deuxième élément de serrage, lorsqu'il est serré sur l'objet de test, a une matrice de rigidité à six degrés de liberté du deuxième élément de serrage par rapport au premier connecteur ; et

dans lequel chaque élément diagonal de la matrice de rigidité à six degrés de liberté du premier connecteur est inférieur à chaque élément diagonal correspondant de la matrice de rigidité à six degrés de liberté du premier élément de serrage par rapport au premier connecteur, et dans lequel chaque élément diagonal de la matrice de rigidité à six degrés de liberté du premier connecteur est inférieur à chaque élément diagonal correspondant de la matrice de rigidité à six degrés de liberté du deuxième élément de serrage par rapport au premier connecteur.

2. La structure de maintien selon la revendication 1, dans laquelle les premier et deuxième éléments de serrage comprennent chacun une première partie et une deuxième partie reliables de manière libérable à la première partie correspondante.

3. La structure de maintien selon la revendication 2, dans laquelle la première partie du premier élément de serrage, la première partie du deuxième élément de serrage et le premier connecteur définissent une première structure monolithique.

4. La structure de maintien selon la revendication 1 ou la revendication 2, dans laquelle le couplage entre la première extrémité du premier connecteur et la première surface interne faisant face du premier élément de serrage est une connexion collée, soudée ou adhésivement liée.

5. La structure de maintien selon l'une quelconque des revendications 1 à 4, dans laquelle le premier connecteur comprend en outre une deuxième partie sensiblement plane du côté opposé de la première partie sensiblement plane, dans laquelle la distance entre les parties planes définit une épaisseur du premier connecteur $t_1$, et dans laquelle le rapport entre la première largeur $w_1$ du premier connecteur et l'épaisseur du premier connecteur $t_1$ est sensiblement égal ou supérieur à 5.

**6.** La structure de maintien selon l'une quelconque des revendications 1 à 5, comprenant en outre un deuxième connecteur ayant une première extrémité couplée à la première surface interne faisant face du premier élément de serrage et une deuxième extrémité couplée à la deuxième surface interne faisant face du deuxième élément de serrage, dans lequel le deuxième connecteur est espacé circonférentiellement du premier connecteur, dans lequel le deuxième connecteur comprend en outre une troisième partie sensiblement plane ayant une deuxième largeur $w_2$ située dans un deuxième plan pour recevoir des moyens de mesure de déformation, dans lequel le deuxième connecteur a une matrice de rigidité à six degrés de liberté du deuxième connecteur,

dans lequel le premier élément de serrage a une matrice de rigidité à six degrés de liberté du premier élément de serrage par rapport au deuxième connecteur,
dans lequel le deuxième élément de serrage a une matrice de rigidité à six degrés de liberté du deuxième élément de serrage par rapport au deuxième connecteur ; et
dans lequel chaque élément diagonal de la matrice de rigidité à six degrés de liberté du deuxième connecteur est inférieur à chaque élément diagonal correspondant de la matrice de rigidité à six degrés de liberté du premier élément de serrage par rapport au deuxième connecteur, et dans lequel chaque élément diagonal de la matrice de rigidité à six degrés de liberté du deuxième connecteur est inférieur à chaque élément diagonal correspondant de la matrice de rigidité à six degrés de liberté du deuxième élément de serrage par rapport au premier connecteur.

**7.** La structure de maintien selon l'une quelconque des revendications 1 à 6, dans laquelle la partie engageable en contact d'au moins l'une de la pluralité de premières et deuxièmes saillies de couplage comprend un espaceur ou un élément structural adapté pour, lors de l'utilisation, réduire une disparité de taille entre la saillie de couplage et l'objet de test.

**8.** La structure de maintien selon l'une quelconque des revendications 1 à 7, dans laquelle la première partie sensiblement plane du premier connecteur s'étend radialement à partir d'un axe central sur une distance sensiblement égale à la première largeur $w_1$, dans laquelle l'axe central est défini par le centre de la première ouverture et le centre de la deuxième ouverture.

**9.** La structure de maintien selon l'une quelconque des revendications 1 à 8, dans laquelle une sélection des premières et deuxièmes saillies de couplage comprend une partie de col ayant des rainures de soulagement de contrainte.

**10.** La structure de maintien selon l'une quelconque des revendications 6 à 9, la séparation angulaire entre le premier connecteur et le deuxième connecteur est d'au moins 30 degrés, en particulier sensiblement égale à 45 degrés, et plus particulièrement sensiblement égale à 90 degrés.

**11.** La structure de maintien selon l'une quelconque des revendications 6 à 10, dans laquelle le deuxième connecteur comprend en outre une quatrième partie sensiblement plane du côté opposé de la troisième partie sensiblement plane, dans laquelle la distance entre les parties planes définit une épaisseur du deuxième connecteur $t_2$, et dans laquelle le rapport entre la deuxième largeur $w_2$ du deuxième connecteur et l'épaisseur du deuxième connecteur $t_2$ est sensiblement égal ou supérieur à 5.

**12.** Un dispositif de détection de force-couple multi-axes pour mesurer au moins un composant de force-couple sur un objet de test, comprenant une structure de maintien selon l'une quelconque des revendications 1 à 11 pour maintenir l'objet de test, et comprenant en outre au moins un moyen de mesure de déformation disposé sur au moins un connecteur, dans lequel le moyen de mesure de déformation est sélectionné dans le groupe consistant en un capteur de déformation à semi-conducteur, un capteur de déformation piézoélectrique, un capteur de déformation basé sur la résistance ou un capteur de déformation basé sur l'onde acoustique de surface

**13.** Le dispositif de détection de force-couple multi-axes selon la revendication 12, comprenant en outre au moins un accéléromètre.

**14.** Un procédé de détermination d'au moins un composant de force-couple agissant sur un composant de test dans au moins une direction, comprenant les étapes de :

fournir un dispositif de détection de force-couple multi-axes selon l'une quelconque des revendications 12 ou 13 ;
fixer la structure de maintien du dispositif de détection de force-couple multi-axes à l'objet de test ;
recevoir au moins une mesure de déformation du dispositif de détection de force-couple multi-axes ; et

déterminer au moins un composant de force-couple sur la base de la ou des mesures de déformation reçues.

15. Le procédé selon la revendication 14, dans lequel l'étape de fixation de la structure de maintien du dispositif de détection de force-couple multi-axes à l'objet de test comprend une étape de couplage mécanique de la structure de maintien à l'objet de test de telle sorte que le premier élément de serrage a une matrice de rigidité de couplage à six degrés de liberté du premier élément de serrage par rapport à l'objet de test, et de telle sorte que le deuxième élément de serrage a une matrice de rigidité de couplage à six degrés de liberté du deuxième élément de serrage par rapport à l'objet de test, dans lequel chaque élément diagonal de la matrice de rigidité à six degrés de liberté du premier connecteur est inférieur à chaque élément diagonal correspondant de la matrice de rigidité à six degrés de liberté du premier élément de serrage par rapport au premier connecteur, et dans lequel chaque élément diagonal de la matrice de rigidité à six degrés de liberté du premier connecteur est inférieur à chaque élément diagonal correspondant de la matrice de rigidité à six degrés de liberté du deuxième élément de serrage par rapport au premier connecteur.

Fig.1

EP 4 232 786 B1

Fig.2a

EP 4 232 786 B1

Fig.2b

$K_{C1}$      $K_{CONN}$      $K_{C2}$

A     $K_T$     B

Fig.2c

Fig.3

EP 4 232 786 B1

EP 4 232 786 B1

Fig.4

Fig.5a

Fig.5b

Fig.5c

Fig.6

Fig.7

Fig.8

Fig.9a

Fig.9b

Fig.9c

Fig.9d

Fig.9e

EP 4 232 786 B1

Fig.10b

Fig.10d

Fig.10a

Fig.10c

Fig.11b

Fig.11c

Fig.11a

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5585572 A, KINDLER ULRICH

- US 2018080840 A1, GLEESON TORIN